# EUROPEAN PATENT SPECIFICATION

(11) **EP 3 352 506 B1**
(45) Date of publication and mention of the grant of the patent: **16.12.2020**
(21) Application number: 15906960.8
(22) Date of filing: 29.10.2015
(51) Int. Cl.: H04W 36/00, H04W 36/30

(54) **METHOD FOR PREDICTING AND REPORTING SIGNAL STRENGTH OF CELL AND USER EQUIPMENT**
VERFAHREN ZUR VORHERSAGE UND MELDUNG DER SIGNALSTÄRKE EINER ZELLE UND BENUTZERGERÄT
PROCÉDÉ DE PRÉVISION ET DE NOTIFICATION DE L'INTENSITÉ DU SIGNAL D'UNE CELLULE, ET ÉQUIPEMENT UTILISATEUR

(43) Date of publication of application: 25.07.2018
(73) Proprietor: Huawei Technologies Co., Ltd., Longgang District Shenzhen, Guangdong 518129 (CN)
(72) Inventor: DANG, Shujun, Shenzhen Guangdong 518129 (CN); JIN, Hui, Shenzhen Guangdong 518129 (CN); FENG, Pengfei, Shenzhen Guangdong 518129 (CN); DUAN, Xiaoyan, Shenzhen Guangdong 518129 (CN)
(74) Representative: Thun, Clemens
(86) International application number: PCT/CN2015/093224
(87) International publication number: WO 2017/070896

(56) References cited:
- EP-A1- 0 455 614
- EP-A1- 1 829 405
- CN-A- 1 889 768
- CN-A- 1 889 768
- CN-A- 1 997 195
- CN-A- 101 557 620
- US-B1- 8 089 939
- POLLINI G P: "TRENDS IN HANDOVER DESIGN", IEEE COMMUNICATIONS MAGAZINE, IEEE SERVICE CENTER, PISCATAWAY, US, vol. 34, no. 3, 1 March 1996 (1996-03-01), pages 82-90, XP000557380, ISSN: 0163-6804, DOI: 10.1109/35.486807
- HUAWEI ET AL: "LTE-WLAN interworking enhancement", 3GPP DRAFT; R2-151572 LTE-WLAN INTERWORKING ENHANCEMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Bratislava, Slovakia; 20150420 - 20150424 19 April 2015 (2015-04-19), XP050936487, Retrieved from the Internet: URL:http://www.3gpp.org/ftp/Meetings_3GPP_ SYNC/RAN2/Docs/ [retrieved on 2015-04-19]

## Description

### TECHNICAL FIELD

The present invention relates to the communications field, and in particular, to a cell signal strength prediction method, a cell signal strength reporting method, and user equipment.

### BACKGROUND

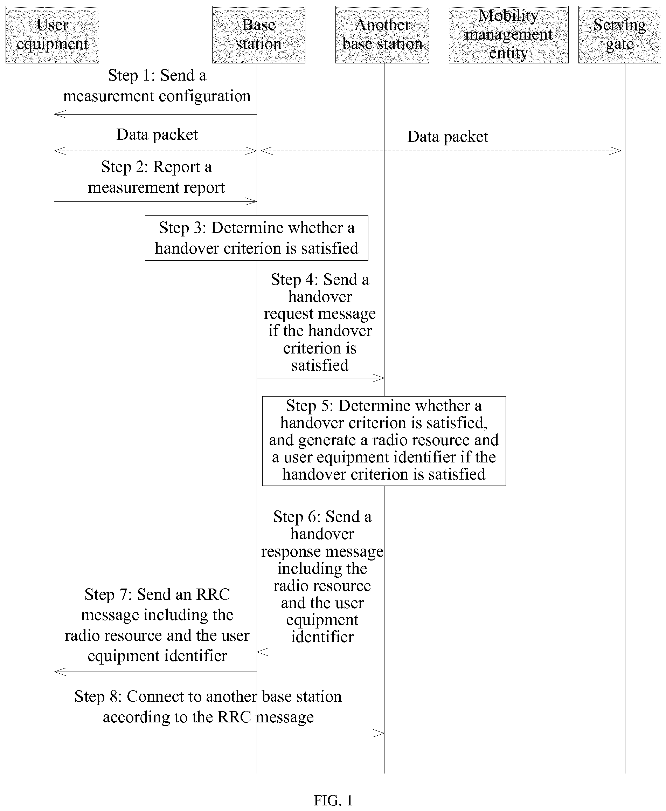

In a cellular mobile communication (Cellular Mobile Communication) system, when a user uses user equipment (User Equipment, UE) to make or receive a call and moves from a coverage area of a serving cell to a coverage area of a neighboring cell of the serving cell, a signal of the serving cell becomes increasingly weaker, and signal strength of the neighboring cell becomes increasingly higher. To ensure that the call is not interrupted, the UE needs to be handed over from the serving cell to the neighboring cell. That is, the UE disconnects a communication connection from the serving cell whose signal is relatively weak, and is connected to the neighboring cell whose signal is relatively strong, so as to ensure communication continuity. Referring to FIG. 1, FIG. 1 is a schematic diagram of interaction for performing a cell handover by user equipment in the prior art. FIG. 1 includes interaction between the user equipment, a base station corresponding to the serving cell, a base station corresponding to a neighboring cell (for example, another base station), a mobility management entity, and a gateway device. The cell handover is mainly completed by using the user equipment, the base station, and the another base station. A specific process is as follows.

The base station sends a measurement configuration to the user equipment according to a current communication status of the user equipment. The user equipment measures signal strength of the serving cell and signal strength of a neighboring cell of the serving cell according to the received measurement configuration, and reports a measurement report to the base station when the measured signal strength satisfies a criterion for reporting the measurement report. The measurement report includes the signal strength of the serving cell and the signal strength of the neighboring cell of the serving cell. After receiving the measurement report and obtaining the included signal strength by means of parsing, the base station determines, based on the signal strength obtained by means of parsing, whether a cell handover criterion is satisfied; and if the cell handover criterion is satisfied, the base station sends a handover request to the another base station. The another base station generates radio resource related configuration information and a user equipment identifier according to the received handover request, and sends a handover response including the radio resource related configuration information and the user equipment identifier to the base station. The base station sends a radio resource control (Radio Resource Control, RRC) message including the radio resource related configuration information and the user equipment identifier to the user equipment according to the received handover response. After receiving the RRC message, the user equipment is connected to the another base station according to the RRC message.

A disadvantage of the prior art is: Two to five seconds or so are required from a time when the base station determines that the cell handover criterion is satisfied to a time when the base station sends the RRC message to the user equipment; and this may cause that actual signal strength of the serving cell used when the base station sends the RRC message to the user equipment to instruct the user equipment to perform a handover is not the signal strength of the serving cell that is measured by the user equipment. Particularly, when the user equipment is located in a hurtling automobile or train (particularly, a high-speed train), there is a relatively big difference between the actual signal strength of the serving cell and the signal strength measured by the user equipment, and even the signal strength of the serving cell is such low that the user equipment cannot receive the RRC message.

CN 1 889 768 discloses a method for carrying out switching in radio mobile communication system that includes obtaining a signal transmission parameter value of a mobile terminal and dynamically regulating a decision threshold for switching when it is confirmed that said signal transmission parameter value is satisfied to a preset condition, and switching the mobile terminal according to regulated decision threshold.

US 8 089 939 discloses a method of roaming in a wireless computer network having a plurality of wireless access points. The method includes communicating with the computer network through a first selected wireless access point, assessing the quality of a communication link between the wireless transceiver and the first selected wireless access point, forecasting the predicted future quality of the communication link as a function of past quality of the communication link, and scanning the access points to identify a second selected access point for communication with the computer network when the forecasted link quality falls below a first link quality threshold.

EP 0 455 614 discloses a method of predicting future measurement values for handoff decisions in a mobile radio communication system.

### SUMMARY

Embodiments of the present invention provide methods for predicting and reporting signal strength of a cell and user equipment, so as to predict the signal strength of the cell in advance.

According to a first aspect, an embodiment of the present invention provides a cell signal strength prediction method, where the method includes:
receiving, by user equipment, a measurement configuration, and measuring signal strength of a serving cell;
recording, by the user equipment, the signal strength of the serving cell within a first preset time period;
determining, by the user equipment based on the signal strength of the serving cell within the first preset time period, whether the signal strength of the serving cell is falling; and
if the signal strength of the serving cell is falling, predicting, by the user equipment, signal strength of the serving cell that is at a second preset time.

According to the foregoing steps, when determining that the signal strength of the serving cell is falling, the user equipment predicts, according to a change law of the falling trend, the signal strength of the serving cell that is at the subsequent second preset time. In this way, the signal strength of the serving cell can be predicted in advance.

Further, the method includes:
measuring, by the user equipment, signal strength of a neighboring cell of the serving cell based on the measurement configuration;
recording, by the user equipment, the signal strength of the neighboring cell of the serving cell within the first preset time period;
determining, by the user equipment based on the signal strength of the neighboring cell of the serving cell within the first preset time period, whether the signal strength of the neighboring cell of the serving cell is increasing; and
if the signal strength of the neighboring cell of the serving cell is increasing, predicting, by the user equipment, signal strength of the neighboring cell of the serving cell that is at the second preset time.

According to the foregoing steps, when determining that the signal strength of the neighboring cell of the serving cell is increasing, the user equipment predicts, according to the rising trend, the signal strength of the neighboring cell of the serving cell that is at the second preset time. In this way, the signal strength of the neighboring cell of the serving cell can be predicted in advance.

Further, after the user equipment predicts the signal strength of the serving cell that is at the second preset time, the method may further include:
determining, by the user equipment based on the predicted signal strength of the serving cell that is at the second preset time, whether a reporting criterion is satisfied; and
if the reporting criterion is satisfied, reporting, by the user equipment, the predicted signal strength of the serving cell that is at the second preset time.

According to the foregoing steps, when using at least one of an event A3, A5, or B1 as a criterion for determining whether to report a measurement report, the user equipment compares the predicted signal strength of the serving cell that is at the second preset time with another measure (for example, the signal strength of the neighboring cell or an absolute threshold) in the corresponding event to determine whether the criterion for reporting the measurement report is satisfied; and if the criterion is satisfied, reports the predicted signal strength to the base station by using the measurement report, so that the base station performs a cell handover based on the predicted signal strength instead of actual signal strength. That is, the base station is propelled to perform a cell handover in advance. This avoids that, in the handover process, the signal strength of the serving cell falls to such an extent that the user equipment cannot receive an RRC message, ensuring a smooth handover of the user equipment from the serving cell to another cell.

Further, after the user equipment predicts the signal strength of the neighboring cell of the serving cell that is at the second preset time, the method may further include:
determining, by the user equipment based on the predicted signal strength of the neighboring cell of the serving cell that is at the second preset time, whether a reporting criterion is satisfied; and
if the reporting criterion is satisfied, reporting, by the user equipment, the predicted signal strength of the neighboring cell of the serving cell that is at the second preset time.

According to the foregoing steps, when using at least one of an event A3, A4, A5, A6, B1, or B2 as a criterion for determining whether to report a measurement report, the user equipment compares the predicted signal strength of the neighboring cell of the serving cell that is at the second preset time with another measure (for example, the signal strength of the serving cell or an absolute threshold) in the corresponding event to determine whether the criterion for reporting the measurement report is satisfied; and if the criterion is satisfied, reports the predicted signal strength of the neighboring cell to the base station by using the measurement report, so that the base station determines, based on the predicted signal strength of the neighboring cell of the serving cell instead of actual signal strength of the neighboring cell of the serving cell, whether the user equipment needs to be handed over from a current serving cell to the neighboring cell of the serving cell. This avoids that after the user equipment is handed over to the neighboring cell of the serving cell, the actual signal strength of the neighboring cell of the serving cell cannot support normal communication of the user equipment.

Further, after the receiving, by user equipment, a measurement configuration, and measuring signal strength of a serving cell, and before the recording, by the user equipment, the signal strength of the serving cell within a first preset time period, the user equipment may further determine whether the signal strength of the serving cell is less than a first threshold; and if the signal strength of the serving cell is less than the first threshold, the user equipment may record the signal strength of the serving cell within the first preset time period.

According to the foregoing steps, the user equipment starts to record the signal strength of the serving cell within the first preset time period only when the signal strength of the serving cell is less than the first threshold, avoiding recording signal strength of the serving cell that is at each time point. This greatly saves storage space of the user equipment and simplifies an operation of the user equipment.

Further, after the measuring, by the user equipment, signal strength of a neighboring cell of the serving cell based on the measurement configuration, and before the recording, by the user equipment, the signal strength of the neighboring cell of the serving cell within the first preset time period, the user equipment may further determine whether the signal strength of the neighboring cell of the serving cell is greater than a second threshold; and if the signal strength of the neighboring cell of the serving cell is greater than the second threshold, the user equipment may record the signal strength of the neighboring cell of the serving cell within the first preset time period.

According to the foregoing steps, the user equipment starts to record the signal strength of the neighboring cell of the serving cell within the first preset time period only when the signal strength of the neighboring cell of the serving cell is greater than the second threshold, avoiding recording signal strength of the serving cell that is at each time point. This greatly saves storage space of the user equipment and simplifies an operation of the user equipment.

According to a second aspect, an embodiment of the present invention provides user equipment, where the user equipment includes a modem and an antenna, where
the modem is configured to receive a measurement configuration by using the antenna, and measure signal strength of a serving cell;
the modem is configured to record the signal strength of the serving cell within a first preset time period;
the modem is configured to determine, based on the signal strength of the serving cell within the first preset time period, whether the signal strength of the serving cell is falling; and
the modem is configured to: when the signal strength of the serving cell is falling, predict signal strength of the serving cell that is at a second preset time.

When determining that the signal strength of the serving cell is falling, the modem predicts, according to a change law of the falling trend, the signal strength of the serving cell that is at the subsequent second preset time. In this way, the signal strength of the serving cell can be predicted.

Further, the modem is configured to measure signal strength of a neighboring cell of the serving cell based on the measurement configuration;
the modem is configured to record the signal strength of the neighboring cell of the serving cell within the first preset time period;
the modem is configured to determine, based on the signal strength of the neighboring cell of the serving cell within the first preset time period, whether the signal strength of the neighboring cell of the serving cell is increasing; and
the modem is configured to: when the signal strength of the neighboring cell of the serving cell is increasing, predict signal strength of the neighboring cell of the serving cell that is at the second preset time.

When determining that the signal strength of the neighboring cell of the serving cell is increasing, the modem predicts, according to the rising trend, the signal strength of the neighboring cell of the serving cell that is at the second preset time. In this way, the signal strength of the neighboring cell of the serving cell can be predicted in advance.

Further, the modem may be configured to determine, based on the predicted signal strength of the serving cell that is at the second preset time, whether a reporting criterion is satisfied; and
the modem may be configured to: when the reporting criterion is satisfied, report the predicted signal strength of the serving cell that is at the second preset time by using the antenna.

According to the modem, when using at least one of an event A3, A5, or B1 as a criterion for determining whether to report a measurement report, the user equipment compares the predicted signal strength of the serving cell that is at the second preset time with another measure (for example, the signal strength of the neighboring cell or an absolute threshold) in the corresponding event to determine whether the criterion for reporting the measurement report is satisfied; and if the criterion is satisfied, reports the predicted signal strength to the base station by using the measurement report, so that the base station performs a cell handover based on the predicted signal strength instead of actual signal strength. That is, the base station is propelled to perform a cell handover in advance. This avoids that, in the handover process, the signal strength of the serving cell falls to such an extent that the user equipment cannot receive an RRC message, ensuring a smooth handover of the user equipment from the serving cell to another cell.

Further, the modem may be configured to determine, based on the predicted signal strength of the neighboring cell of the serving cell that is at the second preset time, whether a reporting criterion is satisfied; and
the modem may be configured to: when the reporting criterion is satisfied, report the predicted signal strength of the neighboring cell of the serving cell that is at the second preset time by using the antenna.

According to the modem, when using at least one of an event A3, A4, A5, A6, B 1, or B2 as a criterion for determining whether to report a measurement report, the user equipment compares the predicted signal strength of the neighboring cell of the serving cell that is at the second preset time with another measure (for example, the signal strength of the serving cell or an absolute threshold) in the corresponding event to determine whether the criterion for reporting the measurement report is satisfied; and if the criterion is satisfied, reports the predicted signal strength of the neighboring cell to the base station by using the measurement report, so that the base station determines, based on the predicted signal strength of the neighboring cell of the serving cell instead of actual signal strength of the neighboring cell of the serving cell, whether the user equipment needs to be handed over from a current serving cell to the neighboring cell of the serving cell. This avoids that after the user equipment is handed over to the neighboring cell of the serving cell, the actual signal strength of the neighboring cell of the serving cell cannot support normal communication of the user equipment.

Further, after that the modem is configured to receive a measurement configuration by using the antenna, and measure signal strength of a serving cell, the modem may be configured to determine whether the signal strength of the serving cell is less than a first threshold; and
if the signal strength of the serving cell is less than the first threshold, the modem may be configured to record the signal strength of the serving cell within the first preset time period.

According to the modem, the user equipment starts to record the signal strength of the serving cell within the first preset time period only when the signal strength of the serving cell is less than the first threshold, avoiding recording signal strength of the serving cell that is at each time point. This greatly saves storage space of the user equipment and simplifies an operation of the user equipment.

Further, after that the modem is configured to measure signal strength of a neighboring cell of the serving cell based on the measurement configuration, and before that the modem is configured to record the signal strength of the neighboring cell of the serving cell within the first preset time period,
the modem may be configured to determine whether the signal strength of the neighboring cell of the serving cell is greater than a second threshold; and
if the signal strength of the neighboring cell of the serving cell is greater than the second threshold, the modem may be configured to record the signal strength of the neighboring cell of the serving cell within the first preset time period.

According to the modem, the user equipment starts to record the signal strength of the neighboring cell of the serving cell within the first preset time period only when the signal strength of the neighboring cell of the serving cell is greater than the second threshold, avoiding recording signal strength of the serving cell that is at each time point. This greatly saves storage space of the user equipment and simplifies an operation of the user equipment.

In the first and second aspect, the determining, based on the signal strength of the serving cell within the first preset time period, whether the signal strength of the serving cell is falling may be specifically:
determining whether a difference between signal strength at a start time point of the first preset time period and signal strength at an end time point of the first preset time period is greater than a preset threshold, where when the difference between the signal strength at the start time point of the first preset time period and the signal strength at the end time point of the first preset time period is greater than the preset threshold, the signal strength of the serving cell is falling.

In the first aspect, the determining, by the user equipment based on the signal strength of the neighboring cell of the serving cell within the first preset time period, whether the signal strength of the neighboring cell of the serving cell is increasing may be specifically:
determining whether a difference between signal strength at an end time point of the first preset time period and signal strength at a start time point of the first preset time period is greater than a preset threshold, where when the difference between the signal strength at the end time point of the first preset time period and the signal strength at the increasing time point of the first preset time period is greater than the preset threshold, the signal strength of the neighboring cell of the serving cell is increasing.

According to the embodiments of the present invention, when determining that the signal strength of the serving cell is falling, the user equipment predicts the signal strength of the serving cell at the subsequent second preset time according to the change law of the falling trend. In this way, the signal strength of the serving cell can be predicted in advance.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of interaction for performing a cell handover by user equipment in the prior art;
FIG. 2 is a schematic flowchart of a cell signal strength prediction method according to an embodiment of the present invention;
FIG. 2A is a schematic diagram of a falling trend of signal strength of a serving cell according to an embodiment of the present invention;
FIG. 3 is a schematic flowchart of another cell signal strength prediction method according to an embodiment of the present invention;
FIG. 4 is a schematic flowchart of another cell signal strength prediction method according to an embodiment of the present invention;
FIG. 4A is a schematic flowchart of another cell signal strength prediction method according to an embodiment of the present invention;
FIG. 5 is a schematic flowchart of another cell signal strength prediction method according to an embodiment of the present invention;
FIG. 5A is a schematic diagram of a rising trend of signal strength of a neighboring cell according to an embodiment of the present invention;
FIG. 6 is a schematic flowchart of another cell signal strength prediction method according to an embodiment of the present invention;
FIG. 7 is a schematic flowchart of another cell signal strength prediction method according to an embodiment of the present invention;
FIG. 7A-1 and FIG. 7A-2 are a schematic flowchart of another cell signal strength prediction method according to an embodiment of the present invention;

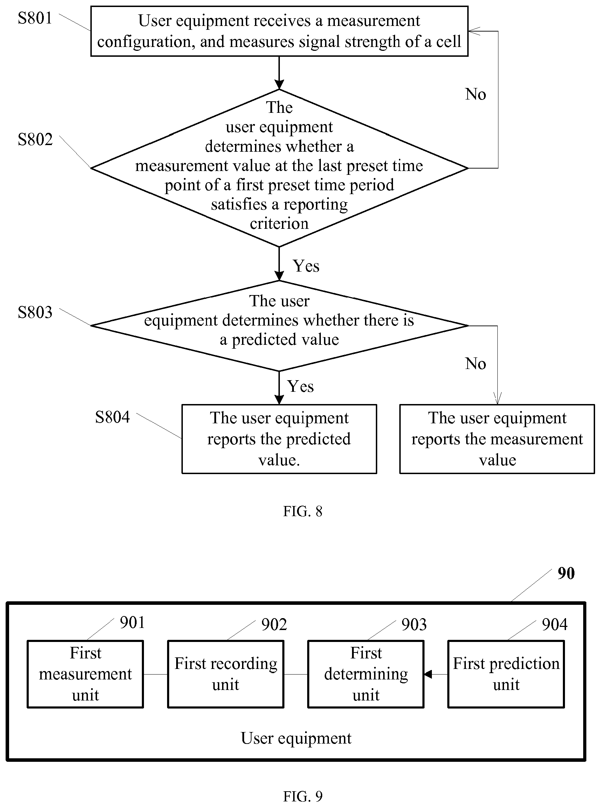

FIG. 8 is a schematic flowchart of a cell signal strength reporting method according to an embodiment of the present invention;

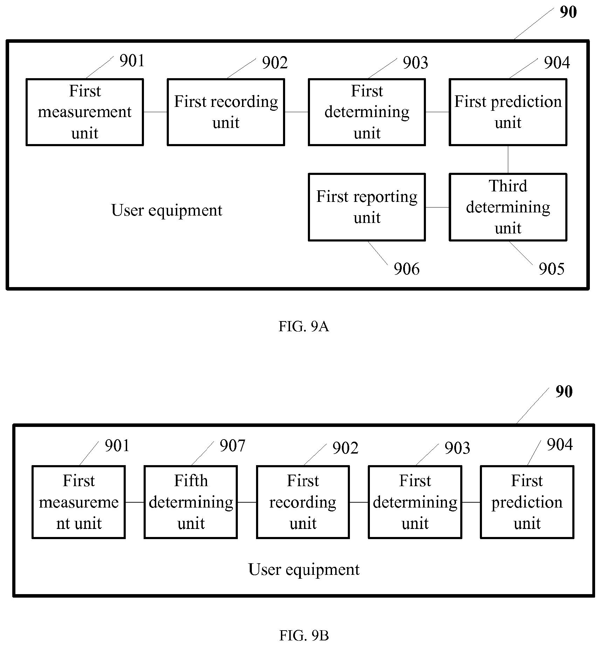

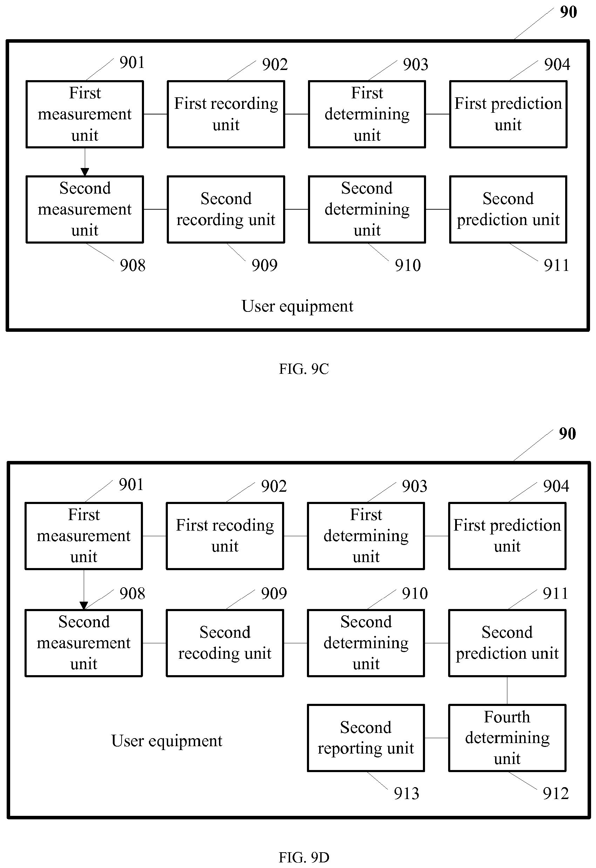

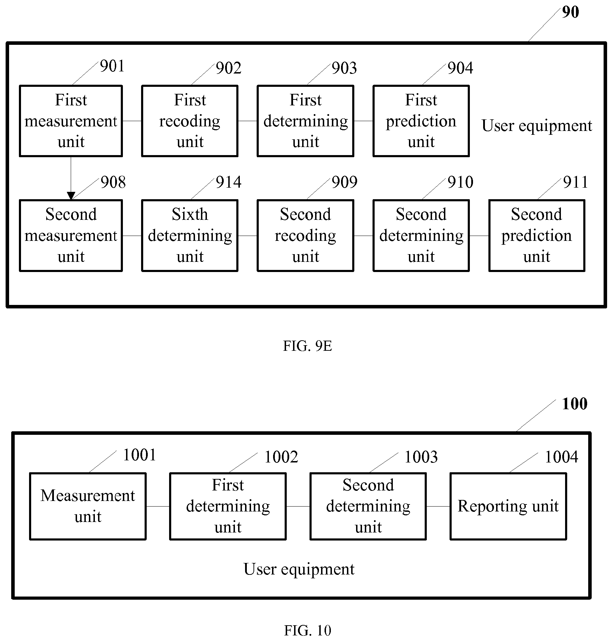

FIG. 9 is a schematic structural diagram of user equipment according to an embodiment of the present invention;
FIG. 9A is a schematic structural diagram of another user equipment according to an embodiment of the present invention;
FIG. 9B is a schematic structural diagram of another user equipment according to an embodiment of the present invention;
FIG. 9C is a schematic structural diagram of another user equipment according to an embodiment of the present invention;
FIG. 9D is a schematic structural diagram of another user equipment according to an embodiment of the present invention;
FIG. 9E is a schematic structural diagram of another user equipment according to an embodiment of the present invention;

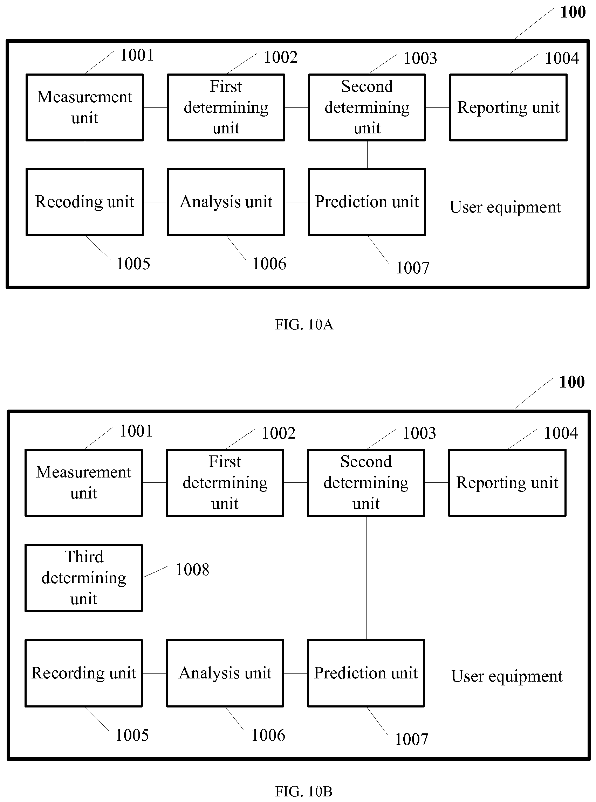

FIG. 10 is a schematic structural diagram of another user equipment according to an embodiment of the present invention;
FIG. 10A is a schematic structural diagram of another user equipment according to an embodiment of the present invention;
FIG. 10B is a schematic structural diagram of another user equipment according to an embodiment of the present invention;

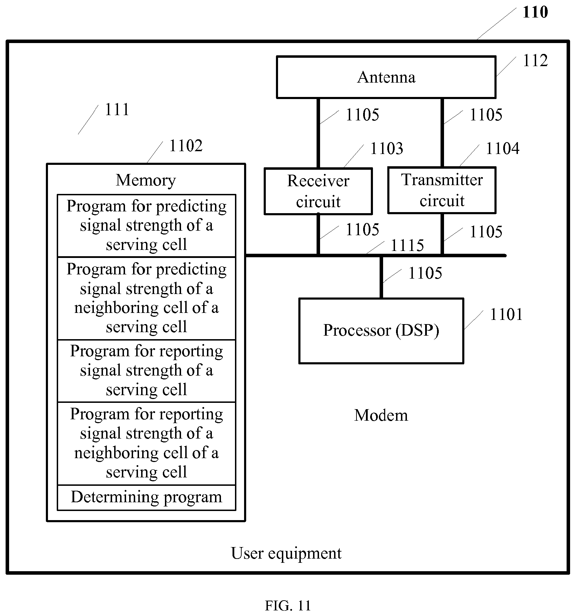

FIG. 11 is a schematic structural diagram of another user equipment according to an embodiment of the present invention; and

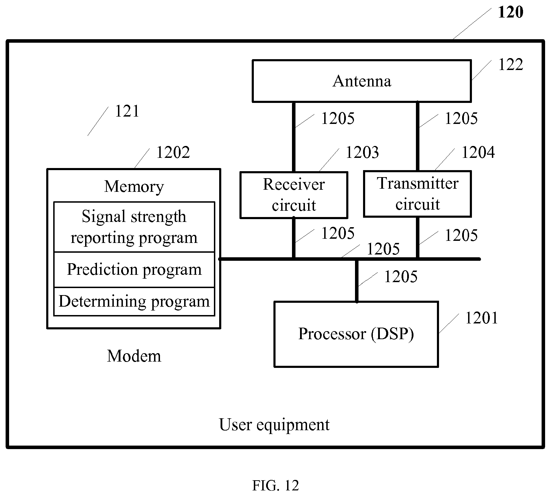

FIG. 12 is a schematic structural diagram of another user equipment according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

User equipment described in the embodiments of the present invention may be a mobile phone, a tablet computer, a notebook computer, a palmtop computer, a mobile Internet device (MID, mobile internet device), a wearable device (for example, a smart watch (for example, iWatch), a smart band, or a pedometer), or another terminal device or communications module on which a subscriber identity module (Subscriber Identity Module, SIM) can be mounted and deployed.

### Embodiment 1

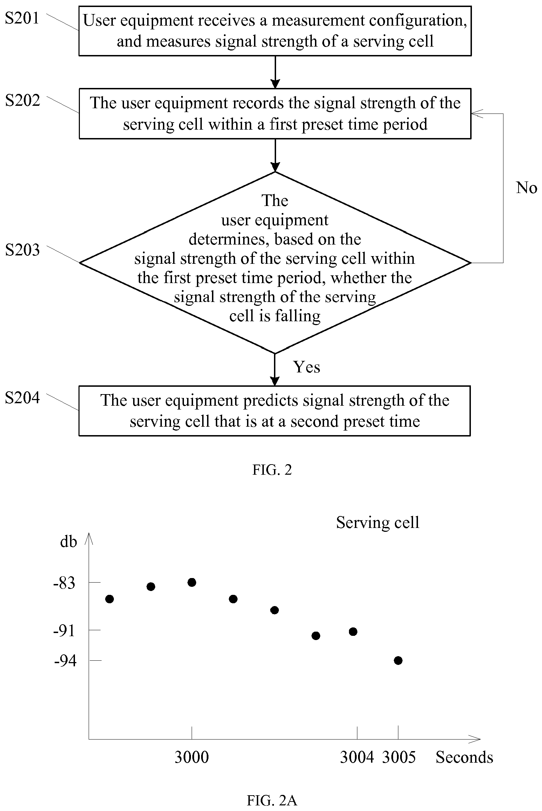

Referring to FIG. 2, FIG. 2 is a schematic flowchart of a cell signal strength prediction method according to an embodiment of the present invention. The method includes the following steps.

Step S201: User equipment receives a measurement configuration, and measures signal strength of a serving cell.

Specifically, a cellular network may include multiple cells. Each cell may correspond to a respective base station. The user equipment is currently located within a signal coverage area of the serving cell and a signal coverage area of a neighboring cell (neighboring cell) of the serving cell. In addition to a primary cell (Primary Cell, PCell), the serving cell (serving) may include at least one secondary cell (Secondary Cell, SCell). When secondary cells (Secondary Cell, SCell) are included, a secondary cell (SCell) having greatest signal strength is a primary secondary cell (PSCell). The user equipment establishes a radio connection (RRC connection) by using the primary cell, and after entering the radio connected state, receives a measurement configuration (Measurement Configuration) sent by a base station corresponding to the primary cell.

The measurement configuration includes an event identifier of at least one of an event A1, A2, A3, A4, A5, A6, B1, or B2. The event identifier may be used as a criterion for the user equipment to determine whether a measurement report (Measurement Report) needs to be reported to the base station. At least signal strength of the primary cell (PCell) needs to be measured regardless of which event's event identifier is used by the user equipment to determine whether the measurement report needs to be reported to the base station. Therefore, the measurement configuration further includes a frequency of the primary cell (PCell). After receiving the measurement configuration sent by the base station, the user equipment starts to measure the signal strength of the serving cell. This specifically includes measuring the signal strength of the primary cell (PCell) of the serving cell.

For ease of understanding of the measurement configuration in this embodiment of the present invention, the following provides specific content of the events A1, A2, A3, A4, A5, A6, B1, and B2 in a communications protocol: The event A1 is that signal strength of a serving cell is greater than an absolute threshold (English: Event A1, Serving becomes better than absolute threshold); the event A2 is that the signal strength of the serving cell is less than an absolute threshold (English: Event A2, Serving becomes worse than absolute threshold); the event A3 is that an amount by which signal strength of a neighboring cell is greater than the signal strength of the serving cell is greater than a particular threshold (English: Event A3, Neighbor becomes amount of offset better than PCell/PSCell); the event A4 is that the signal strength of the neighboring cell is greater than an absolute threshold (English: Event A4, Neighbour becomes better than absolute threshold); the event A5 is that the signal strength of the serving cell is less than an absolute threshold 1 and the signal strength of the neighboring cell is greater than an absolute threshold 2 (English: Event A5, PCell/ PSCell becomes worse than absolute threshold 1 AND neighbour becomes better than another absolute threshold 2); the event A6 is that an amount by which the signal strength of the neighboring cell is greater than that of a secondary cell of the serving cell is greater than a particular threshold (English: Event A6, Neighbour becomes amount of offset better than SCell); the event B1 is that signal strength of an inter-RAT neighboring cell is greater than an absolute threshold (English: Event B1, Inter RAT neighbour becomes better than absolute threshold, where the full name of the RAT is Radio Access Technology); and the event B2 is that the signal strength of the serving cell is less than the absolute threshold 1 and the signal strength of the inter-RAT neighboring cell is greater than the absolute threshold 2 (English: Event B2, PCell becomes worse than absolute threshold 1 AND inter RAT neighbour becomes better than another absolute threshold 2).

When the base station requires that the user equipment use the event A1 as the criterion for determining whether to report the measurement report, the measurement configuration includes an event identifier of the event A1, the absolute threshold (threshold) for the event A1, the frequency of the primary cell, and a signal strength identifier of the primary cell. The signal strength identifier may include at least one of reference signal received power (Reference Signal Received Power, RSRP) or reference signal received quality (Reference Signal Received Quality, RSRQ); and the user equipment measures, according to the measurement configuration, signal strength of the primary cell corresponding to the frequency of the primary cell. After the signal strength of the primary cell is measured, the signal strength of the primary cell is compared with the absolute threshold (threshold), and when the signal strength of the primary cell is greater than the absolute threshold (threshold), it indicates that the criterion for reporting the measurement report corresponding to A1 is satisfied.

When the base station requires that the user equipment use the event A2 as the criterion for determining whether to report the measurement report, the measurement configuration includes an event identifier of the event A2, the absolute threshold (threshold) for the event A2, the frequency of the primary cell, and a signal strength identifier of the primary cell. The signal strength identifier specifically includes at least one of RSRP or RSRQ; and the user equipment measures, according to the measurement configuration, signal strength of the primary cell corresponding to the frequency of the primary cell. After the signal strength of the primary cell is measured, the signal strength of the primary cell is compared with the absolute threshold (threshold), and when the signal strength of the primary cell is less than the absolute threshold (threshold), it indicates that the criterion for reporting the measurement report corresponding to A2 is satisfied.

When the base station requires that the user equipment use the event A3 as the criterion for determining whether to report the measurement report, the measurement configuration includes an event identifier of the event A3, the frequency of the primary cell, a system identifier, a frequency of the neighboring cell, an identifier of the neighboring cell, a signal strength identifier, and a particular threshold for A3. The signal strength identifier specifically includes at least one of RSRP or RSRQ; and the user equipment measures, according to the measurement configuration, signal strength of the primary cell corresponding to the frequency of the primary cell, and signal strength of a neighboring cell in a same system as the primary cell that is determined jointly by using the system identifier, the frequency of the neighboring cell, and the identifier of the neighboring cell. After the signal strength of the primary cell and the signal strength of the neighboring cell are measured, the signal strength of the primary cell is compared with the signal strength of the neighboring cell, and when an amount by which the signal strength of the neighboring cell is greater than the signal strength of the primary cell exceeds the particular threshold, it indicates that the criterion for reporting the measurement report corresponding to A3 is satisfied.

When the base station requires that the user equipment use the event A4 as the criterion for determining whether to report the measurement report, the measurement configuration includes an event identifier of the event A4, the absolute threshold (threshold) for A4, the frequency of the primary cell, a system identifier, a frequency of the neighboring cell, an identifier of the neighboring cell, and a signal strength identifier. The signal strength identifier specifically includes at least one of RSRP or RSRQ; and the user equipment measures, according to the measurement configuration, signal strength of the primary cell corresponding to the frequency of the primary cell, and intra-RAT signal strength of the primary cell that is determined jointly by using the system identifier, the frequency of the neighboring cell, and the identifier of the neighboring cell. After the signal strength of the primary cell and the signal strength of the neighboring cell are measured, the signal strength of the neighboring cell is compared with the absolute threshold (threshold), and when the signal strength of the neighboring cell is greater than the absolute threshold (threshold), it indicates that the criterion for reporting the measurement report corresponding to A4 is satisfied.

When the base station requires that the user equipment use the event A5 as the criterion for determining whether to report the measurement report, the measurement configuration includes an event identifier of the event A5, the absolute threshold 1 (threshold 1) for A5, the absolute threshold 2 (threshold 2) for A5, the frequency of the primary cell, a system identifier, a frequency of the neighboring cell, an identifier of the neighboring cell, and a signal strength identifier. The signal strength identifier specifically includes at least one of RSRP or RSRQ; and the user equipment measures, according to the measurement configuration, signal strength of the primary cell corresponding to the frequency of the primary cell, and intra-RAT signal strength of the primary cell that is determined jointly by using the system identifier, the frequency of the neighboring cell, and the identifier of the neighboring cell. After the signal strength of the primary cell and the signal strength of the neighboring cell are measured, the signal strength of the primary cell and the signal strength of the neighboring cell are compared with the absolute thresholds, and when the signal strength of the neighboring cell is greater than the absolute threshold 2 and the signal strength of the primary cell is less than the absolute threshold 1, it indicates that the criterion for reporting the measurement report corresponding to A5 is satisfied.

When the serving cell includes a secondary cell, the base station may further instruct the user equipment to use the event A6 as the criterion for determining whether to report the measurement report. When the user equipment is instructed to use the event A6 as the criterion for determining whether to report the measurement report, the measurement configuration includes an event identifier of the event A6, the frequency of the primary cell, a frequency of the secondary cell, a system identifier, a frequency of the neighboring cell, an identifier of the neighboring cell, a signal strength identifier, and a particular threshold for A6. The signal strength identifier specifically includes at least one of RSRP or RSRQ; and the user equipment measures, according to the measurement configuration, signal strength of the primary cell corresponding to the frequency of the primary cell, signal strength of the secondary cell corresponding to the frequency of the secondary cell, and intra-RAT signal strength of the primary cell that is determined jointly by using the system identifier, the frequency of the neighboring cell, and the identifier of the neighboring cell. After the signal strength of the primary cell, the signal strength of the secondary cell, and the signal strength of the neighboring cell are measured, the signal strength of the neighboring cell is compared with the signal strength of the secondary cell, and when an amount by which the signal strength of the neighboring cell is greater than the signal strength of the secondary cell exceeds the particular threshold, it indicates that the criterion for reporting the measurement report corresponding to A6 is satisfied.

When the base station requires that the user equipment use the event B1 as the criterion for determining whether to report the measurement report, the measurement configuration includes an event identifier of the event B1, the absolute threshold (threshold) for B1, the frequency of the primary cell, a system identifier, a frequency of the neighboring cell, an identifier of the neighboring cell, and a signal strength identifier. The signal strength identifier specifically includes at least one of RSRP or RSRQ; and the user equipment measures, according to the measurement configuration, signal strength of the primary cell corresponding to the frequency of the primary cell, and inter-RAT signal strength of the primary cell that is determined jointly by using the system identifier, the frequency of the neighboring cell, and the identifier of the neighboring cell. After the signal strength of the primary cell and the signal strength of the neighboring cell are measured, the signal strength of the neighboring cell is compared with the absolute threshold (threshold), and when the signal strength of the neighboring cell is greater than the absolute threshold (threshold), it indicates that the criterion for reporting the measurement report corresponding to B1 is satisfied.

When the base station requires that the user equipment use the event B2 as the criterion for determining whether to report the measurement report, the measurement configuration includes an event identifier of the event B2, the absolute threshold 1 (threshold 1) for B2, the absolute threshold 2 (threshold 2) for B2, the frequency of the primary cell, a system identifier, a frequency of the neighboring cell, an identifier of the neighboring cell, and a signal strength identifier. The signal strength identifier specifically includes at least one of RSRP or RSRQ; and the user equipment measures, according to the measurement configuration, signal strength of the primary cell corresponding to the frequency of the primary cell, and inter-RAT signal strength of the primary cell that is determined jointly by using the system identifier, the frequency of the neighboring cell, and the identifier of the neighboring cell. After the signal strength of the primary cell and the signal strength of the neighboring cell are measured, the signal strength of the primary cell and the signal strength of the neighboring cell are compared with the absolute thresholds, and when the signal strength of the neighboring cell is greater than the absolute threshold 2 and the signal strength of the primary cell is less than the absolute threshold 1, it indicates that the criterion for reporting the measurement report corresponding to B2 is satisfied. It should be noted that the measurement report corresponding to the event A1 is a basis for the base station to stop measuring an inter-frequency or inter-RAT system; the measurement report corresponding to the event A2 is a basis for the base station to start to measure the inter-frequency or inter-RAT system; each of the measurement reports corresponding to the events A3, A4, A5, B1, and B2 is a basis for a cell handover (specifically, a primary cell handover) by the base station; and the measurement report corresponding to the event A6 is a basis for a secondary cell handover by the base station.

Further, the intra-RAT system means that network standards are the same. For example, both the neighboring cell and the primary cell are in the 4^{th} generation mobile telecommunication technology (The 4th Generation Telecommunication, 4G) standard. The inter-RAT system means that network standards are different. For example, the neighboring cell is in the 3^{rd} generation mobile telecommunication (The 3rd Generation Telecommunication, 3G) standard while the primary cell is in the 4G standard.

Step S202: The user equipment records the signal strength of the serving cell within a first preset time period.

Specifically, after starting to measure the signal strength of the serving cell, the user equipment records the measured signal strength within the first preset time period. The first preset time period may be a default configuration in the user equipment, or a time parameter delivered to the user equipment by the base station. During recording of the signal strength, a recording time interval may be set as required, and there are multiple signal strength values recorded within the first preset time period. After signal strength measurement starts, a period after which recording starts may be set as required. For example, recording may be performed immediately after the measurement starts.

The following uses an example to describe how signal strength is recorded within the first preset time period. Assuming that the first preset time period is five seconds, signal strength at the 0^{th}, the 1^{st}, the 2^{nd}, the 3^{rd}, the 4^{th}, and the 5^{th} seconds of the five seconds may be recorded. If a recording start time is the 3000^{th} second recorded by a timer of the user equipment, signal strength at the 3000^{th}, the 3001^{th}, the 3002^{th}, the 3003^{th}, the 3004^{th}, and the 3005^{th} seconds are separately recorded within five seconds. Referring to Table 1, Table 1 shows signal strength data recorded at all recording time points of the first preset time period according to this embodiment of the present invention.

**Table 1**

| **Time on a timer of user equipment** | **Time point of a first preset time period** | **Signal strength** |
|---|---|---|
| The 3000^{th} second | The 0^{th} second | -83 db |
| The 3001^{th} second | The 1^{st} second | -86 db |
| The 3002^{th} second | The 2^{nd} second | -89 db |
| The 3003^{th} second | The 3^{rd} second | -92 db |
| The 3004^{th} second | The 4^{th} second | -91 db |
| The 3005^{th} second | The 5^{th} second | -94 db |

It should be noted that the signal strength is recorded at an equal time interval in the foregoing example, but adjacent time intervals in another embodiment may be set to satisfy a preset function relationship. For example, each recording time interval is less than a previous recording time interval by 0.1 seconds. In this way, similarly, in an example in which the first preset time period is 5 seconds, the user equipment needs to record signal strength at the 0^{th}, the 1^{th}, the 1.9^{th}, the 2.7^{th}, the 3.4^{th}, the 4^{th}, the 4.5^{th}, and the 4.9^{th} seconds. There are still many other examples in which adjacent time intervals satisfy a preset function relationship, and no examples are listed herein.

Step S203: The user equipment determines, based on the signal strength of the serving cell within the first preset time period, whether the signal strength of the serving cell is falling.

Specifically, because signal strength of the serving cell at multiple time points is recorded within the first preset time period, whether the signal strength of the serving cell is falling may be determined according to the signal strength at the multiple time points.

In an optional solution, the falling trend is: A difference between signal strength at an end time point of the first preset time period and signal strength at a start time point of the first preset time period is greater than a preset threshold. The threshold can be set according to actual needs.

In another optional solution, the falling trend is: Within the first preset time period, a difference between signal strength at a start time point of the first preset time period and signal strength at an end time point of the first preset time period is greater than a preset first falling threshold, and when signal strength at a given time point of multiple time points of the first preset time period is greater than signal strength at a previous time point of the given time point, a difference between the signal strength at the given time point and the signal strength at the previous time point of the given time point does not exceed a preset first increasing threshold.

For example, it is assumed that the preset first falling threshold is 10 db, the preset first increasing threshold is 6 db, and within five seconds in which the 3000^{th} second recorded by a timer of the user equipment is used as a recording start point, recorded signal strength at the 3000^{th} second is -83 db, recorded signal strength at the 3001^{th} second is -86 db, recorded signal strength at the 3002^{th} second is -89 db, recorded signal strength at the 3003^{th} second is -92 db, recorded signal strength at the 3004^{th} second is - 91 db, and recorded signal strength at the 3005^{th} second is -94 db. It can be learned from the foregoing data that within the five seconds, a falling amount of the signal strength is 11 db obtained by subtracting -94 db at the 3005^{th} second from -83 db at the 3000^{th} second, that is, -83 db minus -94 db, and the falling amount is greater than the first falling threshold 10 db; and the signal strength at the 3004^{th} second is greater than the signal strength at the 3003^{th} second by 1 db obtained by subtracting -92 db from -91 db, and the rising amount that is less than the first increasing threshold 6 db. Therefore, it can be determined that the signal strength of the serving cell is falling.

Referring to FIG. 2A, FIG. 2A is a schematic diagram of a falling trend of the signal strength of the serving cell according to this embodiment of the present invention. In FIG. 2A, the signal strength before the 3001^{th} second is rising, but signal strength at the 3001^{th} to the 3005^{th} seconds continues to fall on the whole. Although there a slight rise at the 3004^{th} second, a rising amount is particularly small (the rising amount is less than the preset first increasing threshold). Therefore, the signal strength at the 3000^{th} to the 3005^{th} seconds is falling.

Step S204: If the signal strength of the serving cell is falling, the user equipment predicts signal strength of the serving cell that is at a second preset time.

Specifically, when it is determined that the signal strength of the serving cell is falling, a general falling law of the falling trend is further determined according to the recorded signal strength at the multiple time points, and the signal strength of the serving cell at the second preset time is predicted according to the falling law.

In an optional solution, a falling amount of the signal strength of the serving cell is approximately in proportion to falling duration. For example, assuming that the first preset time period is five seconds, and signal strength at the 0^{th} second, signal strength at the 1^{st} second, signal strength at the 2^{nd} second, signal strength at the 3^{rd} second, signal strength at the 4^{th} second, and signal strength at the 5^{th} second are respectively -83 db, -86 db, -89 db, -92 db, -91 db, and -94 db, data obtained by dividing recording duration into a value obtained by subtracting signal strength at a recording end time from signal strength at a recording start time is ((-83) - (-94))/5 = 2.2 db. That is, the signal strength of the serving cell falls by about 2.2 db every second. When the signal strength of the serving cell is falling, it may be deemed that the signal strength of the serving cell continues to fall by following the falling trend in the subsequent period of time. Therefore, the signal strength at the second preset time may be calculated roughly according to the falling trend.

The second preset time is a time point after the signal strength within the first preset time period is recorded, and can be derived according to a predefined rule. For example, the second preset time arrives when a preset time interval (for example, three seconds) elapses after the signal strength within the first preset time period is recoded. If a time for starting to record the signal strength of the serving cell is the 3000^{th} second recorded by the timer of the user equipment, and the user equipment records signal strength within a total of five seconds, 3000 + 5 + 3 = 3008 seconds, that is, the 3008^{th} second is the second preset time. If the user equipment starts to record signal strength within five seconds at the 4000^{th} second subsequently, 4000 + 5 + 3 = 4008 seconds, that is, the 4008^{th} second is the second preset time, and so on. In other words, each time after the user equipment records the signal strength within the first preset time period, a second preset time can be derived according to a recording time and a preset time interval.

If the second preset time arrives when an interval of three seconds elapses after the recording is completed, the signal strength at the second preset time can be derived as: the last recorded signal strength minus a product of an estimated signal strength falling value per second and a time interval. Using the foregoing as an example, (-94) - 2.2 x 3 = -100.6 db.

It should be noted that there may be another linear relationship between a falling amount of the signal strength of the serving cell and the falling duration, and a specific linear relationship can be obtained by performing mathematical modeling on the recorded signal strength.

In an optional solution, after predicting the signal strength of the serving cell that is at the second preset time, if needing to report the measurement report to the base station, the user equipment may encapsulate the predicted signal strength of the serving cell that is at the second preset time in a field of the signal strength of the serving cell in the measurement report. This is different from the prior art in which currently measured signal strength of the serving cell is encapsulated.

According to step S201 to step S204, when determining that the signal strength of the serving cell is falling, the user equipment predicts, according to a change law of the falling trend, the signal strength of the serving cell that is at the subsequent second preset time. In this way, the signal strength of the serving cell can be predicted in advance.

Still further, after the signal strength of the serving cell is predicted in step S201 to step S204, step S205 and step S206 may be further performed to report the predicted signal strength of the serving cell to the base station.

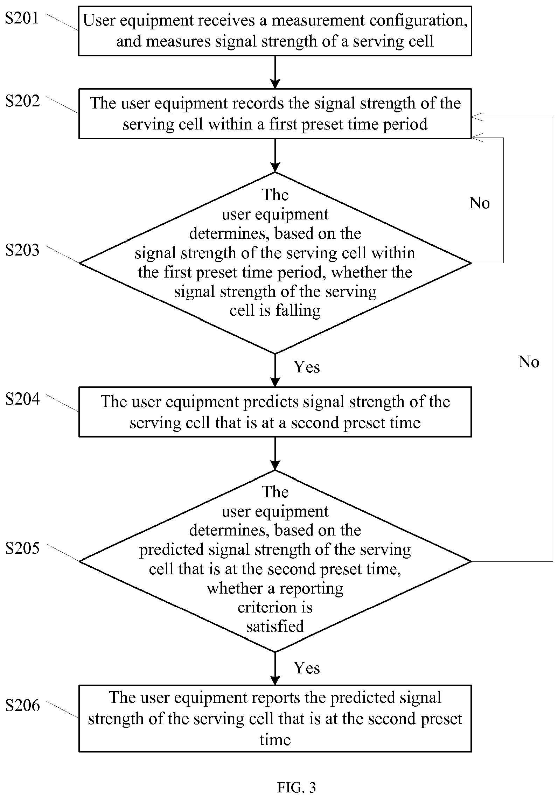

Referring to FIG. 3, FIG. 3 is a schematic flowchart of a cell signal strength prediction method according to an embodiment of the present invention. The method is used to: predict signal strength of a serving cell, and report the predicted signal strength. Detailed descriptions of step S205 and step S206 are as follows.

Step S205: The user equipment determines, based on the predicted signal strength of the serving cell that is at the second preset time, whether a reporting criterion is satisfied.

Specifically, the reporting criterion is specifically the foregoing criterion for reporting the measurement report. The measurement report may instruct the user equipment to use at least one of the event A3, the event A5, or the event B2 as the criterion for determining whether to report the measurement report. When the user equipment uses at least one of the event A3, the event A5, or the event B2 as the determining criterion, a comparison with the signal strength of the serving cell, or more specifically a comparison with signal strength of a primary cell of the serving cell is included. In a specific comparison, a comparison with the predicted signal strength of the serving cell that is at the second preset time is performed. This is different from the prior art in which a comparison with currently measured signal strength of the serving cell is performed.

For example, it is assumed that the measurement report received by the user equipment at the 3000^{th} second instructs the user equipment to use the event A3 (that is, an amount by which signal strength of a neighboring cell is greater than the signal strength of the serving cell is greater than a particular threshold) as a criterion for determining whether to report the measurement report, signal strength of the serving cell that is measured by the user equipment at the 3005^{th} second is -94 db, measured signal strength of the neighboring cell of the serving cell is -97 db, and according to the signal strength of the serving cell at the 3000^{th} to the 3005^{th} seconds, signal strength of the serving cell at the 3008^{th} second (the second preset time) is predicted as -100.6 db. In this case, the user equipment compares -100.6 db with -97 db to determine whether the measurement report corresponding to A3 needs to be sent to the base station. This is different from the prior art in which -94 db is compared with -97 db to determine whether the measurement report corresponding to A3 needs to be sent to the base station. For a principle that is used when the user equipment uses A5 or B2 as a criterion for determining whether the measurement report needs to be reported to the base station, reference may be made to the corresponding description provided when A3 is used as the determining criterion, and details are not described again herein.

Step S206: If the reporting criterion is satisfied, the user equipment reports the predicted signal strength of the serving cell that is at the second preset time.

Specifically, if the criterion for reporting the measurement report to the base station is satisfied, the predicted signal strength of the serving cell that is at the second preset time is used as the signal strength of the serving cell in the measurement report.

For example, assuming that the criterion for sending, to the base station, the measurement report corresponding to A3 is satisfied, signal strength of the serving cell that is measured at the 3005^{th} second is - 94 db, and signal strength of the serving cell at the second preset time is predicted as -100.6 db, in the measurement report corresponding to A3, -100.6 db is used as the signal strength of the serving cell that is to be sent to the base station. In this way, the base station determines, based on -100.6 db, whether a cell handover criterion is satisfied, and if the cell handover criterion is satisfied, a cell handover operation is performed. In addition, a principle for sending a measurement report corresponding to A5 or B2 is the same as the principle for sending the measurement report corresponding to A3, and details are not described again herein.

According to step S205 and step S206, when using at least one of an event A3, A5, or B1 as a criterion for determining whether to report a measurement report, the user equipment compares the predicted signal strength of the serving cell that is at the second preset time with another measure (for example, the signal strength of the neighboring cell or an absolute threshold) in the corresponding event to determine whether the criterion for reporting the measurement report is satisfied; and if the criterion is satisfied, reports the predicted signal strength to the base station by using the measurement report, so that the base station performs a cell handover based on the predicted signal strength instead of actual signal strength. That is, the base station is propelled to perform a cell handover in advance. This avoids that, in the handover process, the signal strength of the serving cell falls to such an extent that the user equipment cannot receive an RRC message, ensuring a smooth handover of the user equipment from the serving cell to another cell.

To further improve the solution in this embodiment of the present invention, after the signal strength of the serving cell is predicted in step S201 to step S204, step 207 may be further performed to select a proper time for predicting the signal strength of the serving cell.

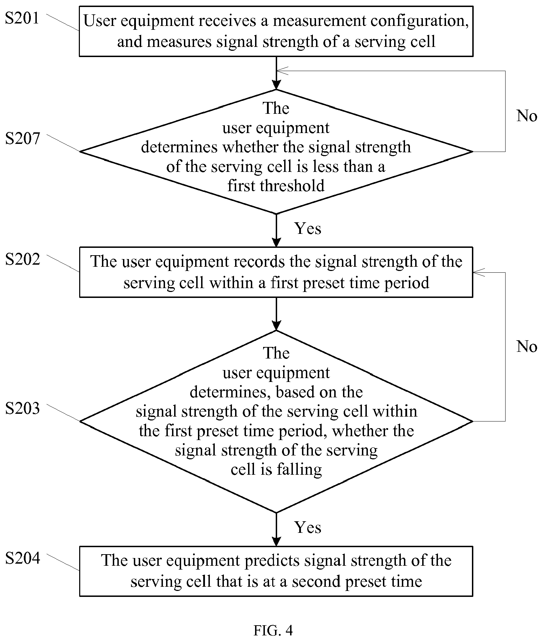

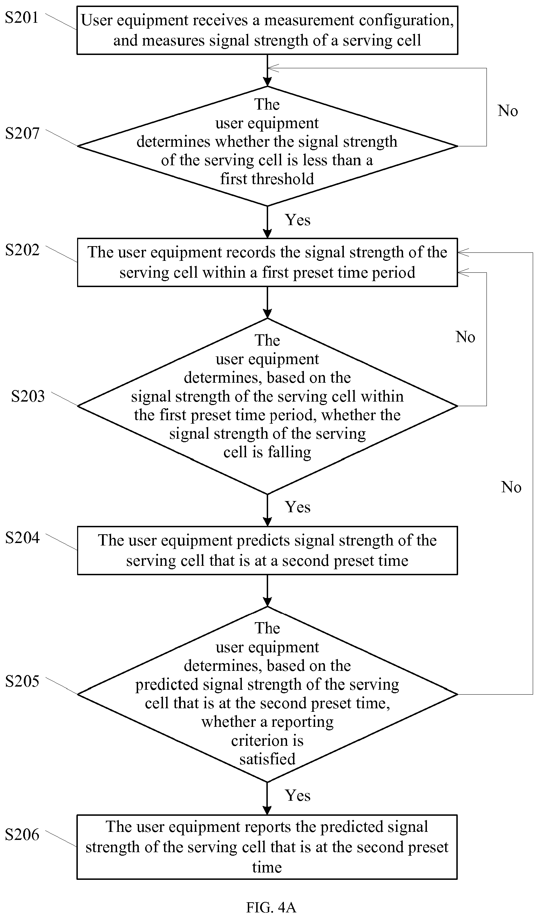

Referring to FIG. 4, after step S201 and before step S202, the cell signal strength prediction method according to this embodiment of the present invention further includes the following step:

Step S207: The user equipment determines whether the signal strength of the serving cell is less than a first threshold.

If the signal strength of the serving cell is less than the first threshold, step S202 is performed.

Specifically, after step S201 is performed, that is, after starting to measure current signal strength of the serving cell starts, the user equipment determines whether the measured signal strength of the serving cell is less than the first threshold; and if the measured signal strength of the serving cell is less than the first threshold, starts to record the signal strength of the serving cell within the first preset time period, or if the measured signal strength of the serving cell is greater than the first threshold, does not record the signal strength of the serving cell within the first preset time period.

It should be noted that the first threshold may be a reference value that is preconfigured in the user equipment and that represents a signal strength value, or a reference value that is sent to the user equipment by the base station and that represents a signal strength value. Optionally, when the first threshold is sent to the user equipment by the base station, the first threshold may be equal to the absolute threshold (threshold) in the event A2.

According to step S207, the user equipment starts to record the signal strength of the serving cell within the first preset time period only when the signal strength of the serving cell is less than the first threshold, avoiding recording signal strength of the serving cell that is at each time point. This greatly saves storage space of the user equipment and simplifies an operation of the user equipment.

Alternatively, to further improve the solution in this embodiment of the present invention, whether the signal strength of the serving cell is less than a first preset threshold may be first determined. When the determining result is that the signal strength of the serving cell is less than the first preset threshold, the user equipment performs recording and prediction, and finally, reports predicted signal strength of the serving cell that is at the second preset time to the base station. A corresponding procedure is shown in FIG. 4A. For detailed descriptions of the steps, reference may be made to the descriptions in the foregoing corresponding steps, and details are not repeated herein.

Further, after the signal strength of the serving cell is predicted in step S201 to step S204, step S208 to step S211 may be further performed to predict signal strength of a neighboring cell of a serving cell.

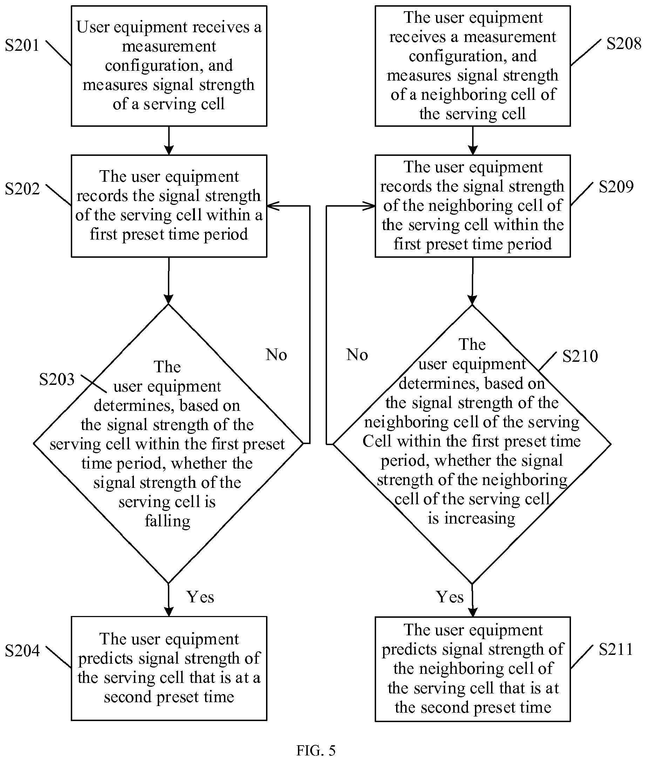

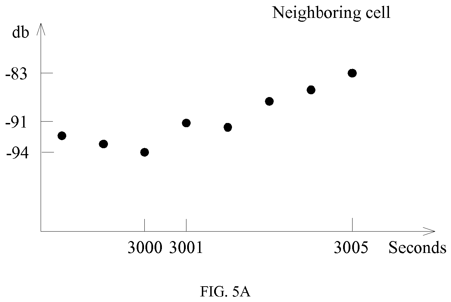

Referring to FIG. 5, FIG. 5 is a schematic flowchart of a cell signal strength prediction method according to an embodiment of the present invention. The method is used to predict the signal strength of the serving cell and the signal strength of the neighboring cell of the serving cell. Detailed descriptions of step S208 to step S211 are as follows.

Step S208: The user equipment receives a measurement configuration, and measures signal strength of a neighboring cell of the serving cell.

Specifically, in addition to steps such as step S201, the execution process of this embodiment of the present invention includes step S208. That is, after receiving the measurement configuration, the user equipment not only needs to measure the signal strength of the serving cell, but also needs to measure the signal strength of the neighboring cell of the serving cell. When the measurement configuration instructs the user equipment to use at least one of an event A3, A4, A5, A6, B1, or B2 as a criterion for determining whether to report a measurement report, the measurement configuration includes a frequency of the neighboring cell, an event identifier, a signal strength identifier (instructs which measure is measured), or the like, and is used to instruct the user equipment to measure the signal strength of the neighboring cell indicated by the frequency of the neighboring cell.

Step S209: The user equipment records the signal strength of the neighboring cell of the serving cell within the first preset time period.

Specifically, a principle for recording the signal strength of the neighboring cell of the serving cell is the same as that for recording the signal strength of the serving cell (that is, the same as the principle in step S202). A difference lies in that an object recorded in step S202 is the signal strength of the serving cell while an object recorded in step S209 is the signal strength of the neighboring cell of the serving cell.

Step S210: The user equipment determines, based on the signal strength of the neighboring cell of the serving cell within the first preset time period, whether the signal strength of the neighboring cell of the serving cell is increasing.

Specifically, because signal strength of the neighboring cell of the serving cell at multiple time points is recorded within the first preset time period, whether the signal strength of the neighboring cell of the serving cell is increasing may be determined according to the signal strength at the multiple time points.

In an optional solution, the rising trend is: Within the first preset time period, a difference between signal strength at an end time point of the first preset time period and signal strength at a start time point of the first preset time period is greater than a preset threshold. The threshold can be set according to actual needs.

In another optional solution, the rising trend is: Within the first preset time period, a difference between signal strength at an end time point of the first preset time period and signal strength at a start time point of the first preset time period is greater than a preset second increasing threshold, and when signal strength at a given time point of the multiple time points of the first preset time period is less than signal strength at a previous time point of the given time point, a difference between the signal strength at the previous time point of the given time point and the signal strength at the given time point does not exceed a preset second falling threshold. There may be one or more neighboring cells of the serving cell.

For example, it is assumed that the preset second increasing threshold is 10 db, the preset second falling threshold is 6 db, and within five seconds in which the 3000^{th} second recorded by a timer of the user equipment is used as a recording start point, recorded signal strength at the 3000^{th} second is -94 db, recorded signal strength at the 3001^{th} second is -91 db, recorded signal strength at the 3002^{th} second is -92 db, recorded signal strength at the 3003^{th} second is -89 db, recorded signal strength at the 3004^{th} second is -86 db, and recorded signal strength at the 3005^{th} second is -83 db. It can be learned from the foregoing data that within the five seconds, a rising amount of the signal strength is 11 db obtained by subtracting -94 db at the 3000^{th} second from -83 db at the 3005^{th} second, that is, -83 db minus -94 db, and the rising amount is greater than the second increasing threshold 10 db; the signal strength at the 3002^{th} second is less than the signal strength at the 3001^{th} second by 1 db obtained by subtracting -92 db from -91 db, and the falling amount is less than the second falling threshold 6 db. Therefore, it can be determined that the signal strength of the serving cell is increasing.

Referring to FIG. 5A, FIG. 5A is a schematic diagram of a rising trend of signal strength of a neighboring cell of a serving cell according to an embodiment of the present invention. In FIG. 5A, the neighboring cell of the serving cell has relatively steady signal strength before the 3000^{th} second while signal strength at the 3000^{th} to the 3005^{th} seconds continues to rise on the whole. Although there is a slight fall at the 3001^{th} second, a falling amount is particularly small (the falling amount is less than a preset second falling threshold). Therefore, it is determined that the signal strength of the neighboring cell is increasing at the 3000^{th} to the 3005^{th} seconds.

Step S211: If the signal strength of the neighboring cell of the serving cell is increasing, the user equipment predicts signal strength of the neighboring cell of the serving cell that is at the second preset time.

Specifically, when it is determined that the signal strength of the neighboring cell of the serving cell is increasing, a general rising law of the rising trend is further determined according to the recorded signal strength at the multiple time points, and the signal strength of the neighboring cell of the serving cell at the second preset time is predicted according to the rising law.

In an optional solution, a signal strength rising amount of the neighboring cell of the serving cell is approximately in proportion to rising duration. For example, assuming that the first preset time period is five seconds, and signal strength at the 0^{th} second, signal strength at the 1^{st} second, signal strength at the 2^{nd} second, signal strength at the 3^{rd} second, signal strength at the 4^{th} second, and signal strength at the 5^{th} second are respectively -94 db, -91 db, -92 db, -89 db, -86 db, and -83 db, data obtained by dividing recording duration into a value obtained by subtracting signal strength at a recording end time from signal strength at a recording start time is ((-83) - (-94))/5 = 2.2 db. That is, the signal strength of the neighboring cell of the serving cell rises by about 2.2 db every second. When the signal strength of the neighboring cell of the serving cell is increasing, it may be deemed that the signal strength of the neighboring cell of the serving cell continues to rise according to the rising trend in a subsequent period of time. Therefore, signal strength of the neighboring cell of the serving cell that is at a second preset time point can be calculated roughly according to the rising trend.

The second preset time is a time point after the signal strength of the neighboring cell of the serving cell within the first preset time period is recorded, and can be derived according to a predefined rule. For example, the second preset time arrives when a preset time interval (for example, three seconds) elapses after the signal strength of the neighboring cell of the serving cell within the first preset time period is recorded. If a time for starting to record the signal strength of the neighboring cell of the serving cell is the 3000^{th} second recorded by a timer of the user equipment, and the user equipment records signal strength within a total of five seconds, 3000 + 5 + 3 = 3008 seconds, that is, the 3008^{th} second is the second preset time. If the user equipment starts to record signal strength within five seconds at the 4000^{th} second subsequently, 4000 + 5 + 3 = 4008 seconds, that is, the 4008^{th} second is the second preset time, and so on. In other words, each time after the user equipment records the signal strength within the first preset time period, a second preset time can be derived according to a recording time and a preset time interval.

If the second preset time arrives when an interval of three seconds elapses after the recording is completed, the signal strength of the neighboring cell of the serving cell that is at the second preset time can be derived as: a sum of the last recorded signal strength and a product of an estimated signal strength rising value per second and a time interval. Using the foregoing as an example, (-83) + 2.2 x 3 = -76.4 db.

It should be noted that there may be another linear relationship between a signal strength rising amount of the neighboring cell of the serving cell and rising duration, and a specific linear relationship can be obtained by performing mathematical modeling on the recorded signal strength.

In an optional solution, after predicting the signal strength of the neighboring cell of the serving cell that is at the second preset time, if needing to report the measurement report to the base station, the user equipment may encapsulate the predicted signal strength of the neighboring cell of the serving cell that is at the second preset time in a field of the signal strength of the neighboring cell of the serving cell in the measurement report. This is different from the prior art in which currently measured signal strength of a neighboring cell of a serving cell is encapsulated.

According to step S208 to step S211, when determining that the signal strength of the neighboring cell of the serving cell is increasing, the user equipment predicts, according to the rising trend, the signal strength of the neighboring cell of the serving cell that is at the second preset time. In this way, the signal strength of the neighboring cell of the serving cell can be predicted in advance.

To further improve the solution in this embodiment of the present invention, after the signal strength of the serving cell and the signal strength of the neighboring cell of the serving cell is predicted in step S201 to step S204 and step S208 to step S211, step S212 and step S213 may be further performed to report the predicted signal strength of the neighboring cell of the serving cell to the base station.

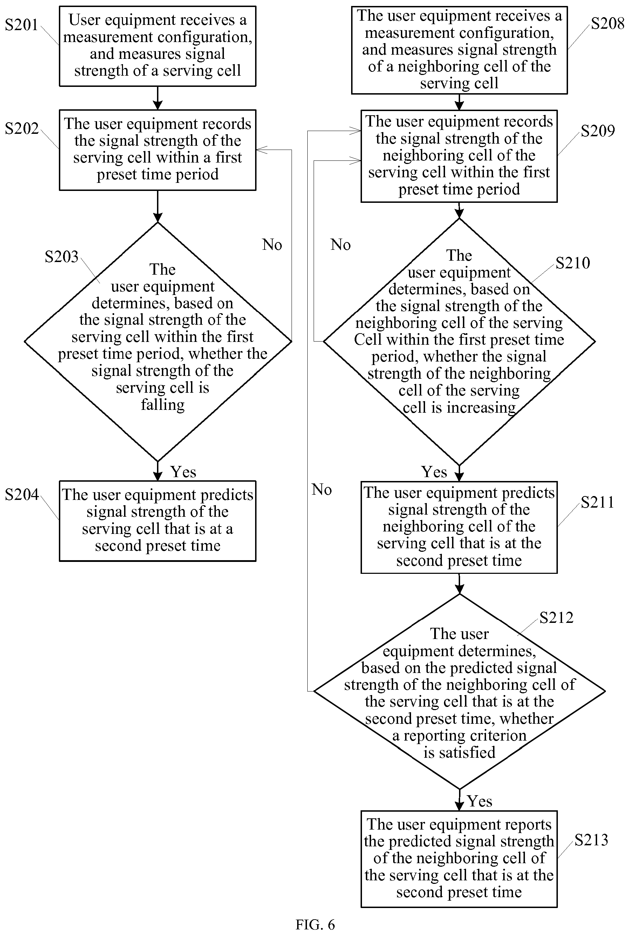

Referring to FIG. 6, FIG. 6 is a schematic flowchart of a cell signal strength prediction method according to an embodiment of the present invention. The method is used to: predict signal strength of a serving cell and signal strength of a neighboring cell of the serving cell, and report the predicted signal strength of the neighboring cell of the serving cell. Detailed descriptions of step S212 and step S213 are as follows.

Step S212: The user equipment determines, based on the predicted signal strength of the neighboring cell of the serving cell that is at the second preset time, whether a reporting criterion is satisfied.

Specifically, the reporting criterion is specifically the foregoing criterion for reporting the measurement report. The measurement report may instruct the user equipment to use at least one of an event A3, A4, A5, B1, or B2 as the criterion for determining whether to report the measurement report. When the user equipment uses at least one of the event A3, A4, A5, B1, or B2 as the criterion for determining whether to report the measurement report, a comparison with the signal strength of the neighboring cell of the serving cell is included. In a specific comparison, a comparison with the predicted signal strength of the neighboring cell of the serving cell that is at the second preset time is performed. This is different from the prior art in which a comparison with currently measured signal strength of the neighboring cell of the serving cell is compared.

For example, it is assumed that the measurement report received by the user equipment at the 3000^{th} second instructs the user equipment to use the event A4 (that is, signal strength of a neighboring cell of the serving cell is greater than an absolute threshold) as a criterion for determining whether to report the measurement report, signal strength of the neighboring cell of the serving cell that is measured by the user equipment at the 3005^{th} second is -83 db, and according to the signal strength of the neighboring cell of the serving cell at the 3000^{th} to the 3005^{th} seconds, signal strength of the neighboring cell of the serving cell at the 3008^{th} second (the second preset time) is predicted as -76.4 db. In this case, the user equipment compares -76.4 db with the absolute threshold in A4 to determine whether the measurement report corresponding to A4 needs to be sent to the base station. This is different from the prior art in which -83 db is compared with the absolute threshold in A4 to determine whether the measurement report corresponding to A4 needs to be sent to the base station. For a principle that is used when the user equipment uses at least one of an event A3, A5, B1, or B2 as the criterion for determining whether the measurement report needs to be reported to the base station, reference may be made to the corresponding description provided when A4 is used as the determining criterion, and details are not described again herein.

Step S213: If the reporting criterion is satisfied, the user equipment reports the predicted signal strength of the neighboring cell of the serving cell that is at the second preset time.

Specifically, when the criterion for reporting the measurement report by the base station is satisfied, and the measurement report needs to include signal strength of the neighboring cell of the serving cell, the predicted signal strength of the neighboring cell of the serving cell that is at the second preset time is used as the signal strength of the neighboring cell of the serving cell in the measurement report.

For example, assuming that the criterion for sending, to the base station, the measurement report corresponding to A4 is satisfied, signal strength of the neighboring cell of the serving cell that is measured at the 3005^{th} second is -83 db, and signal strength of the neighboring cell of the serving cell at the second preset time is predicted as -76.4 db, in the measurement report corresponding to A4, -76.4 db is used as the signal strength of the neighboring cell of the serving cell to be sent to the base station. In this way, the base station determines, based on -76.4 db, whether a criterion for a handover from the serving cell for the user equipment to the neighboring cell of the serving cell is satisfied, and if the criterion is satisfied, the base station performs a cell handover operation. In addition, a principle for sending a measurement report corresponding to any one of A3, A5, B1 or B2 is the same as the principle for sending the measurement report corresponding to A4, and details are not described again herein.

According to step S212 and step S213, when using at least one of an event A3, A4, A5, A6, B1, or B2 as a criterion for determining whether to report a measurement report, the user equipment compares the predicted signal strength of the neighboring cell of the serving cell that is at the second preset time with another measure (for example, the signal strength of the serving cell or an absolute threshold) in the corresponding event to determine whether the criterion for reporting the measurement report is satisfied; and if the criterion is satisfied, reports the predicted signal strength of the neighboring cell of the serving cell to the base station by using the measurement report, so that the base station determines, based on the predicted signal strength of the neighboring cell of the serving cell instead of actual signal strength of the neighboring cell of the serving cell, whether the user equipment needs to be handed over from a current serving cell to the neighboring cell of the serving cell. This avoids that after the user equipment is handed over to the neighboring cell of the serving cell, the actual signal strength of the neighboring cell of the serving cell cannot support normal communication of the user equipment.

To further improve the solution in this embodiment of the present invention, step S201 to step S206 and step S208 to step S213 may be further performed. For detailed descriptions of the steps, reference may be made to the descriptions in the foregoing corresponding steps, and details are not repeated herein.

To further improve the solution in this embodiment of the present invention, after the signal strength of the serving cell and the signal strength of the neighboring cell of the serving cell are predicted in step S201 to step S204 and step S208 to step S211, step S214 may be further performed to select a proper time for predicting the signal strength of the neighboring cell of the serving cell.

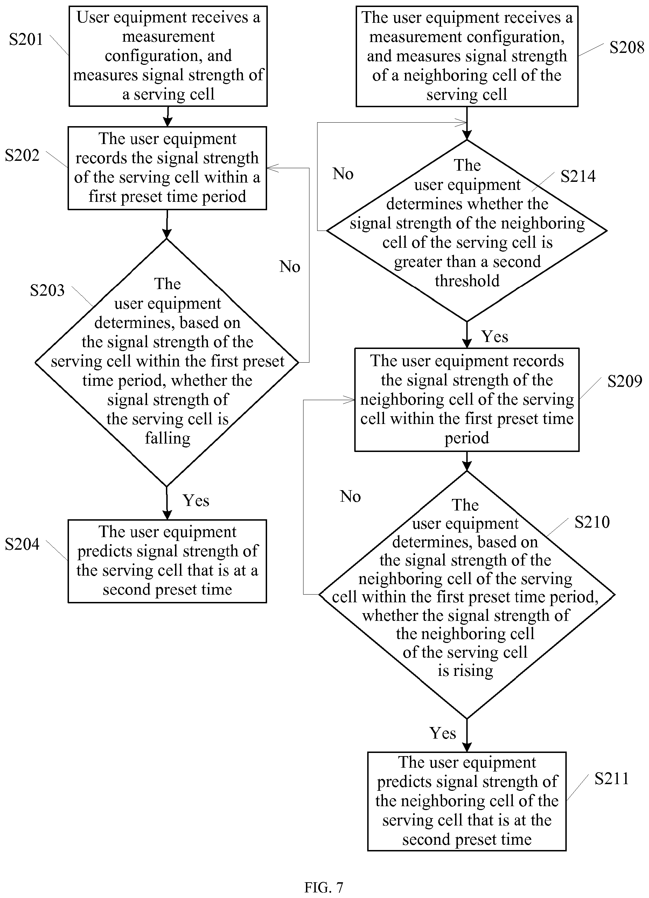

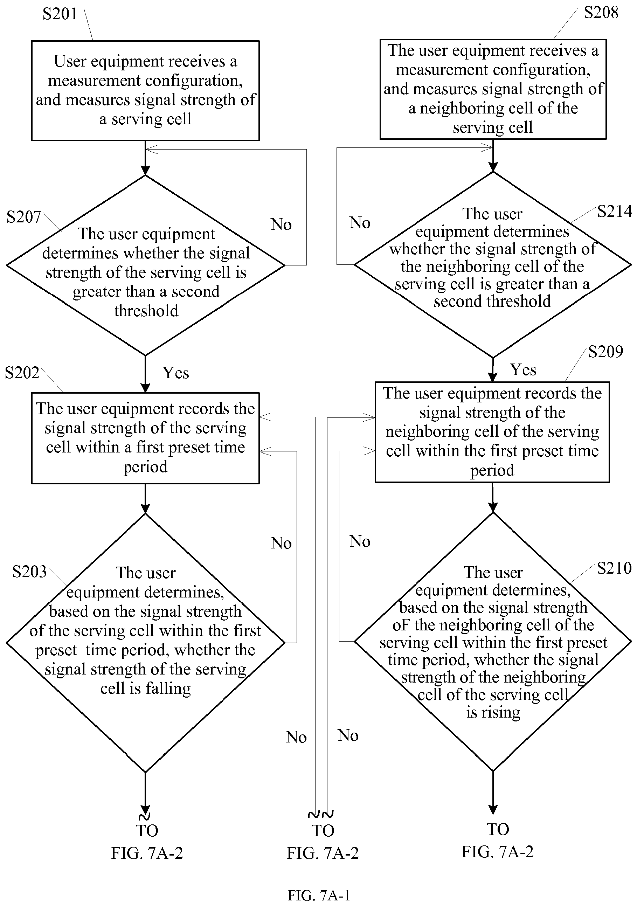

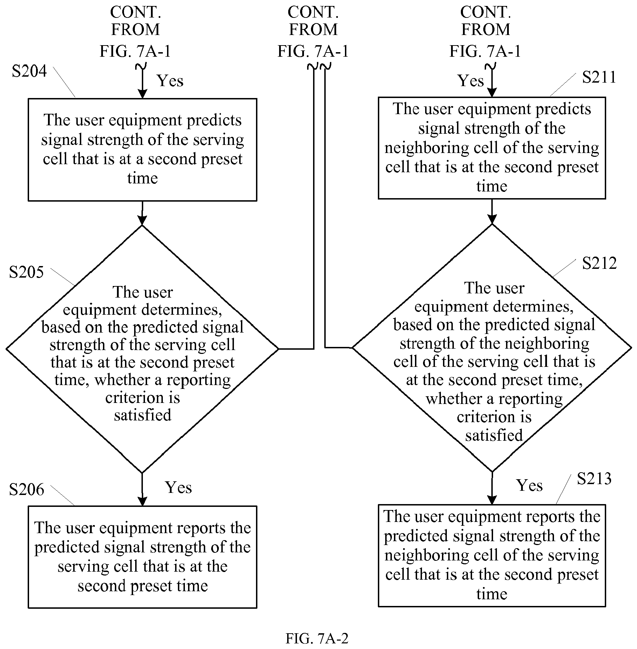

Referring to FIG. 7, FIG. 7 is a schematic flowchart of a cell signal strength prediction method according to an embodiment of the present invention. The method is used to predict the signal strength of the neighboring cell of the serving cell at a proper time. Detailed descriptions of step S214 are as follows:

Step S214: The user equipment determines whether the signal strength of the neighboring cell of the serving cell is greater than a second threshold; and if the signal strength of the neighboring cell of the serving cell is greater than the second threshold, performs step S209.

After step S208 and before step S209, the user equipment may perform step S214.

Specifically, after step S208 is performed, that is, after starting to measure the signal strength of the neighboring cell of the serving cell, the user equipment determines whether the measured signal strength of the neighboring cell of the serving cell is greater than the second threshold; and if the signal strength is greater than the second threshold, the user equipment records signal strength of the neighboring cell of the serving cell within a first preset time period, or if the signal strength is less than the second threshold, does not record the signal strength of the neighboring cell of the serving cell within a first preset time period.

It should be noted that the second threshold may be a reference value that is preconfigured in the user equipment and that represents a signal strength value, or a reference value that is sent to the user equipment by the base station and that represents a signal strength value. When the second threshold is sent to the user equipment by the base station, the second threshold may be equal to the absolute threshold (threshold) in the event A4.

According to step S214, the user equipment starts to record the signal strength of the neighboring cell of the serving cell only when the signal strength of the neighboring cell of the serving cell is greater than the second threshold, avoiding recording the signal strength of the neighboring cell of the serving cell that is at each time point. This greatly saves storage space of the user equipment and simplifies an operation of the user equipment.

To further improve the solution in this embodiment of the present invention, step S201 to step S214 may be further performed, to predict and report the signal strength of the serving cell and the signal strength of the neighboring cell of the serving cell. A corresponding flowchart is shown in FIG. 7A-1 and FIG. 7A-2. For detailed descriptions of the steps, reference may be made to the descriptions in the foregoing corresponding steps, and details are not repeated herein.

### Embodiment 2

Referring to FIG. 8, FIG. 8 is a schematic flowchart of a cell signal strength reporting method according to an embodiment of the present invention. The method includes the following steps.

Step S801: User equipment receives a measurement configuration, and measures signal strength of a cell.

The cell may be a serving cell, may be a neighboring cell of a serving cell, or may be a serving cell and a neighboring cell of the serving cell.

For details, refer to the descriptions in step S201, and details are not repeated herein.

Step S802: The user equipment determines whether a measurement value at the last preset time point of a first preset time period satisfies a reporting criterion.

Specifically, the first preset time period is a time period preset, and the first preset time period has multiple preset time points. Each preset time point is a time point for measuring signal strength. A measurement value is obtained in each measurement.

For example, assuming that the first preset time period is five seconds, a start time point is the 3000^{th} second, and signal strength is measured once every second within the five seconds, the 3000^{th} second, the 3001^{th} second, the 3002^{th} second, the 3003^{th} second, the 3004^{th} second, and the 3005^{th} second of the five seconds are all preset time points. The 3005^{th} second is the last preset time point of the first preset time period.

Further, the reporting criterion is specifically a criterion for reporting a measurement report. The measurement report may instruct the user equipment to use at least one of an event A1, A2, A3, A4, A5, A6, B 1, or B2 as a criterion for determining whether to report the measurement report. When the user equipment uses at least one of an event A1, A2, A3, A4, A5, A6, B1, or B2 as the determining criterion, a comparison with a measurement value of signal strength of the cell that is obtained by means of measurement is included.

For example, when the measurement report instructs the user equipment to use the event A5 (that is, signal strength of the serving cell is less than an absolute threshold 1 and signal strength of the neighboring cell is greater than an absolute threshold 2) as a criterion for determining whether to report a measurement report, the user equipment determines whether the signal strength of the serving cell is less than the absolute threshold 1 and the signal strength of the neighboring cell is greater than the absolute threshold 2. If a determining result is that the signal strength of the serving cell is less than the absolute threshold 1 and the signal strength of the neighboring cell is greater than the absolute threshold 2, it indicates that the reporting criterion, that is, the criterion for reporting a measurement report corresponding to A5, is satisfied. In a determining process, a measurement value of the signal strength of the serving cell that is obtained by means of measurement is compared with the absolute threshold 1, and a measurement value of the signal strength of the neighboring cell of the serving cell that is obtained by means of measurement is compared with the absolute threshold 2. In addition, when the measurement report instructs the user equipment to use at least one of an event A1, A2, A3, A4, A6, B1, or B2 as a criterion for determining whether to report the measurement report, a determining principle is the same as the determining principle for A5, and no examples are provided herein.

Step S803: If the measurement value satisfies the reporting criterion, the user equipment determines whether there is a predicted value.

Specifically, if there is the predicted value, the predicted value is signal strength of the cell that is after a period of time and that is calculated by the user equipment. For example, it is assumed that the user equipment measures the signal strength of the cell at the 3000^{th} second, the 3001^{th} second, the 3002^{th} second, the 3003^{th} second, the 3004^{th} second, and the 3005^{th} second, the measured signal strength at the 3005^{th} second is -90 db, and the user equipment calculates, based on the signal strength at the 3000^{th} second, the 3001^{th} second, the 3002^{th} second, the 3003^{th} second, the 3004^{th} second, and the 3005^{th} second, that signal strength at the 3008^{th} second is -95 db. At the 3005^{th} second, -90 db is the measurement value, and -95 db is the predicted value (the predicted value at the 3008^{th} second).

Further, the predicted value is calculated after the user equipment receives the measurement configuration and measures the signal strength of the cell. The calculation manner may be: recording the measurement value of the signal strength of the cell within the first preset time period; obtaining, by means of analysis by the user equipment, a change trend of the signal strength of the cell based on the measurement value of the signal strength of the cell within the first preset time period; and predicting, by the user equipment according to the change trend, the predicted value of the signal strength of the cell that is at a second preset time.

In an optional solution, the change trend is a falling trend. The falling trend may be: Within the first preset time period, a difference between signal strength at a start time point of the first preset time period and signal strength at an end time point of the first preset time period is greater than a preset first falling threshold, and when signal strength at a given time point of multiple time points of the first preset time period is greater than signal strength at a previous time point of the given time point, a difference between the signal strength at the given time point and the signal strength at the previous time point of the given time point does not exceed a preset first increasing threshold.

For example, it is assumed that the preset first falling threshold is 10 db, the preset first increasing threshold is 6 db, and within five seconds in which the 3000^{th} second recorded by a timer of the user equipment is used as a recording start point, recorded signal strength at the 3000^{th} second is -83 db, recorded signal strength at the 3001^{th} second is -86 db, recorded signal strength at the 3002^{th} second is -89 db, recorded signal strength at the 3003^{th} second is -92 db, recorded signal strength at the 3004^{th} second is - 91 db, and recorded signal strength at the 3005^{th} second is -94 db. It can be learned from the foregoing data that within the five seconds, a falling amount of the signal strength is 11 db obtained by subtracting -94 db at the 3005^{th} second from -83 db at the 3000^{th} second, that is, -83 db minus -94 db, and the falling amount is greater than the first falling threshold 10 db; and the signal strength at the 3004^{th} second is greater than the signal strength at the 3003^{th} second by 1 db obtained by subtracting -92 db from -91 db, and the rising amount is less than the first increasing threshold 6 db. Therefore, it can be determined that the signal strength of the serving cell is falling.

In another optional solution, the change trend is a rising trend. The rising trend is specifically: Within the first preset time period, a difference between signal strength at an end time point of the first preset time period and signal strength at a start time point of the first preset time period is greater than a preset second increasing threshold, and when signal strength at a given time point of multiple time points of the first preset time period is less than signal strength at a previous time point of the given time point, a difference between the signal strength at the previous time point of the given time point and the signal strength at the given time point does not exceed a preset second falling threshold.

For example, it is assumed that the preset second increasing threshold is 10 db, the preset second falling threshold is 6 db, and within five seconds in which the 3000^{th} second recorded by a timer of the user equipment is used as a recording start point, recorded signal strength at the 3000^{th} second is -94 db, recorded signal strength at the 3001^{th} second is -91 db, recorded signal strength at the 3002^{th} second is -92 db, recorded signal strength at the 3003^{th} second is -89 db, recorded signal strength at the 3004^{th} second is -86 db, and recorded signal strength at the 3005^{th} second is -83 db. It can be learned from the foregoing data that within the five seconds, a rising amount of the signal strength is 11 db obtained by subtracting -94 db at the 3000^{th} second from -83 db at the 3005^{th} second, that is, -83 db minus -94 db, and the rising amount is greater than the second increasing threshold 10 db; the signal strength at the 3002^{th} second is less than the signal strength at the 3001^{th} second by 1 db obtained by subtracting -92 db from -91 db, and the falling amount is less than the second falling threshold 6 db. Therefore, it can be determined that the signal strength of the cell is increasing.

Further, the falling trend is used as an example of the change trend in the following to describe how to signal strength at a given future time point is predicted according to a signal strength change trend.

When it is determined that the signal strength of the cell is falling, a general falling law of the falling threshold is further determined according to the recorded signal strength at the multiple time points, and the signal strength of the cell at the second preset time is predicted according to the falling law.

In an optional solution, a falling amount of the signal strength of the cell is approximately in proportion to falling duration. For example, assuming that the first preset time period is five seconds, and signal strength at the 0^{th} second, signal strength at the 1^{st} second, signal strength at the 2^{nd} second, signal strength at the 3^{rd} second, signal strength at the 4^{th} second, and signal strength at the 5^{th} second are respectively -83 db, -86 db, -89 db, -92 db, -91 db, and -94 db, data obtained by dividing recording duration into a value obtained by subtracting signal strength at a recording end time from signal strength at a recording start time is ((-83) - (-94))/5 = 2.2 db. That is, the signal strength of the cell falls by about 2.2 db every second. When the signal strength of the cell is falling, it may be deemed that the signal strength of the cell continues to fall in a subsequent period of time according to the falling trend. Therefore, the signal strength at the second preset time point may be calculated roughly according to the falling trend.

The second preset time is a time point after the signal strength within the first preset time period is recorded, and can be derived according to a predefined rule. For example, the second preset time arrives when a preset time interval (for example, three seconds) elapses after the signal strength within the first preset time period is recoded. If a time for starting to record the signal strength of the cell is the 3000^{th} second recorded by the timer of the user equipment, and the user equipment records signal strength within a total of five seconds, 3000 + 5 + 3 = 3008 seconds, that is, the 3008^{th} second is the second preset time. If the user equipment starts to record signal strength within five seconds at the 4000^{th} second subsequently, 4000 + 5 + 3 = 4008 seconds, that is, the 4008^{th} second is the second preset time, and so on. In other words, each time after the user equipment records the signal strength within the first preset time period, a second preset time can be derived according to a recording time and a preset time interval.

If the second preset time arrives when an interval of three seconds elapses after the recording is completed, the signal strength at the second preset time can be derived as: the last recorded signal strength minus a product of an estimated signal strength falling value per second and a time interval. Using the foregoing as an example, (-94) - 2.2 x 3 = -100.6 db.

It should be noted that there may be another linear relationship between a signal strength falling amount of the cell and the falling duration, and a specific linear relationship can be obtained by performing mathematical modeling on the recorded signal strength.

Further, after the user equipment receives the measurement configuration, and measures the signal strength of the cell, and before recording the measurement value of the signal strength of the cell within the first preset time period, the user equipment may further determine whether a measurement value obtained by means of measurement before the first preset time period satisfies a preset criterion; and when the measurement value satisfies the preset criterion, the user equipment performs the step of recording the measurement value of the signal strength of the cell within the first preset time period. In an optional solution, the preset criterion is that the signal strength is greater than a threshold. In another optional solution, the preset criterion is that the signal strength is less than a threshold. It should be noted that the threshold may be a signal strength value prestored in the user equipment that is used for reference in comparison, or may be a reference threshold included in a measurement configuration sent to the user equipment by a base station. The threshold may be equal to the absolute threshold (threshold) corresponding to the event A2 or the event A4, or may be set to another value according to an actual situation.

For example, it is assumed that the preset criterion is that the signal strength is less than -90 db, and a measurement value of the signal strength obtained by means of measurement by the user equipment at the 2999^{th} second is -91 db. The user equipment obtains, by comparing -91 db with -90 db, that the measurement value of the signal strength at the 2999^{th} second satisfies the preset criterion; in this case, the user equipment records a measurement value of signal strength within a first preset time period after the 2999^{th} second. Further, if the signal strength measured by the user equipment at the 2999^{th} second is -80 db, and the user equipment obtains, by comparing -80 db with -90 db, that the measurement value of the signal strength at the 2999^{th} second does not satisfy the preset criterion; in this case, the user equipment does not record the measurement value of the signal strength temporarily.

Step S804: If there is the predicted value, the user equipment reports the predicted value.

Specifically, when determining that there is the predicted value, the user equipment reports a measurement report to the base station. Signal strength in the measurement report is the predicted value instead of a measurement value.

According to step S801 to step S804, when signal strength of a cell satisfies a reporting criterion, user equipment first determines whether there is a predicted value; and if there is the predicted value, reports the predicted value, so that a base station can perform a cell handover in advance according to the predicted value. This ensures network connection continuity.

The foregoing details the method in this embodiment of the present invention. To better implement the foregoing solution in this embodiment of the present invention, the following provides a corresponding apparatus in an embodiment of the present invention.

### Embodiment 3

Referring to FIG. 9, FIG. 9 is a schematic structural diagram of user equipment 90 according to an embodiment of the present invention. The user equipment 90 may include a first measurement unit 901, a first recording unit 902, a first determining unit 903, and a first prediction unit 904. Detailed descriptions of all units are as follows:

The first measurement unit 901 is configured to receive a measurement configuration, and measure signal strength of a serving cell.

The first recording unit 902 is configured to record the signal strength of the serving cell within a first preset time period.

The first determining unit 903 is configured to determine, based on the signal strength of the serving cell within the first preset time period, whether the signal strength of the serving cell is falling.

The first prediction unit 904 is configured to: when the first determining unit 903 determines that the signal strength of the serving cell is falling, predict signal strength of the serving cell that is at a second preset time.

According to the user equipment 90 shown in FIG. 9, when determining that the signal strength of the serving cell is falling, the user equipment 90 predicts the signal strength of the serving cell that is at a subsequent time according to a change law of the trend. In this way, the signal strength of the serving cell can be predicted in advance.

Referring to FIG. 9A, FIG. 9A is another schematic structural diagram of user equipment according to an embodiment of the present invention. To further improve the solution in this embodiment of the present invention, in addition to the first measurement unit 901, the first recording unit 902, the first determining unit 903, and the first prediction unit 904, the user equipment 90 may include a third determining unit 905 and a first reporting unit 906. Detailed descriptions of the third determining unit 905 and the first reporting unit 906 are as follows:

The third determining unit 905 is configured to: after the first prediction unit predicts the signal strength of the serving cell that is at the second preset time, determine, based on the predicted signal strength of the serving cell that is at the second preset time, whether a reporting criterion is satisfied.

The first reporting unit 906 is configured to: when the third determining unit 905 determines that the reporting criterion is satisfied, report the predicted signal strength of the serving cell that is at the second preset time.

After the third determining unit 905 and the first reporting unit 906 are disposed in the user equipment 90, when using at least one of an event A3, A5, or B 1 as a criterion for determining whether to report a measurement report, the user equipment 90 compares the predicted signal strength of the serving cell that is at the second preset time with another measure (for example, signal strength of a neighboring cell or an absolute threshold) in the corresponding event to determine whether the criterion for reporting the measurement report is satisfied; and if the criterion is satisfied, reports the predicted signal strength to a base station by using the measurement report, so that the base station performs a cell handover based on the predicted signal strength instead of actual signal strength. That is, the base station is propelled to perform a cell handover in advance. This avoids that, in the handover process, the signal strength of the serving cell falls to such an extent that the user equipment 90 cannot receive an RRC message, ensuring a smooth handover of the user equipment 90 from the serving cell to another cell.

Referring to FIG. 9B, FIG. 9B is another schematic structural diagram of user equipment 90 according to an embodiment of the present invention. To further improve the solution in this embodiment of the present invention, in addition to the first measurement unit 901, the first recording unit 902, the first determining unit 903, and the first prediction unit 904, the user equipment 90 may include a fifth determining unit 907. The fifth determining unit 907 is configured to: after the first measurement unit 901 receives the measurement configuration and measures the signal strength of the serving cell, determine whether the signal strength of the serving cell is less than a first threshold; and if determining that the signal strength of the serving cell is less than the first threshold, trigger the first recording unit 902 to record the signal strength of the serving cell within the first preset time period.

After the fifth determining unit 907 is disposed in the user equipment 90, the user equipment 90 starts to record the signal strength of the serving cell within the first preset time period only when the signal strength of the serving cell is less than the first threshold, avoiding recording signal strength of the serving cell that is at each time point. This greatly saves storage space of the user equipment and simplifies an operation of the user equipment 90.

To further improve the solution in this embodiment of the present invention, the user equipment 90 may further include all of the first measurement unit 901, the first recording unit 902, the first determining unit 903, the first prediction unit 904, a third determining unit 905, a first reporting unit 906, and a fifth determining unit 907. For specific implementation of all the units, reference may be made to descriptions of the same units in the foregoing solution.

Referring to FIG. 9C, FIG. 9C is another schematic structural diagram of user equipment according to an embodiment of the present invention. To further improve the solution in this embodiment of the present invention, in addition to the first measurement unit 901, the first recording unit 902, the first determining unit 903, and the first prediction unit 904, the user equipment 90 may include a second measurement unit 908, a second recording unit 909, a second determining unit 910, and a second prediction unit 911. Detailed descriptions of all newly added units are as follows:

The second measurement unit 908 is configured to measure signal strength of a neighboring cell of the serving cell based on the measurement configuration.

The second recording unit 909 is configured to record the signal strength of the neighboring cell of the serving cell within the first preset time period.

The second determining unit 910 is configured to determine, based on the signal strength of the neighboring cell of the serving cell within the first preset time period, whether the signal strength of the neighboring cell of the serving cell is increasing.

The second prediction unit 911 is configured to: when the second determining unit 910 determines that the signal strength of the neighboring cell of the serving cell is increasing, predict the signal strength of the neighboring cell of the serving cell that is at the second preset time.

After the second measurement unit 908, the second recording unit 909, the second determining unit 910, and the second prediction unit 911 are newly added to the user equipment 90, when determining that the signal strength of the neighboring cell of the serving cell is increasing, the user equipment 90 predicts, according to the rising trend, the signal strength of the neighboring cell of the serving cell that is at the second preset time. In this way, the signal strength of the neighboring cell of the serving cell can be predicted in advance.

Referring to FIG. 9D, FIG. 9D is another schematic structural diagram of user equipment according to an embodiment of the present invention. To further improve the solution in this embodiment of the present invention, in addition to the first measurement unit 901, the first recording unit 902, the first determining unit 903, the first prediction unit 904, the second measurement unit 908, the second recording unit 909, the second determining unit 910, and the second prediction unit 911, the user equipment 90 may include a fourth determining unit 912 and a second reporting unit 913. Detailed descriptions of the fourth determining unit 912 and the second reporting unit 913 are as follows:

The fourth determining unit 912 is configured to: after the second prediction unit 911 predicts the signal strength of the neighboring cell of the serving cell that is at the second preset time, determine, based on the predicted signal strength of the neighboring cell of the serving cell that is at the second preset time, whether a reporting criterion is satisfied.

The second reporting unit 913 is configured to: when the fourth determining unit 912 determines that the reporting criterion is satisfied, report the predicted signal strength of the neighboring cell of the serving cell that is at the second preset time.

After the fourth determining unit 912 and the second reporting unit 913 are disposed in the user equipment 90, when using at least one of an event A3, A4, A5, A6, B1, or B2 as a criterion for determining whether to report a measurement report, the user equipment 90 compares the predicted signal strength of the neighboring cell of the serving cell that is at the second preset time with another measure (for example, the signal strength of the serving cell or an absolute threshold) in the corresponding event to determine whether the criterion for reporting the measurement report is satisfied; and if the criterion is satisfied, reports the predicted signal strength of the neighboring cell of the serving cell to a base station by using the measurement report, so that the base station determines, based on the predicted signal strength of the neighboring cell of the serving cell instead of actual signal strength of the neighboring cell of the serving cell, whether the user equipment 90 needs to be handed over from a current serving cell to the neighboring cell of the serving cell. This avoids that after the user equipment 90 is handed over to the neighboring cell of the serving cell, the actual signal strength of the neighboring cell of the serving cell cannot support normal communication of the user equipment 90.

Referring to FIG. 9E, FIG. 9E is another schematic structural diagram of user equipment according to an embodiment of the present invention. To further improve the solution in this embodiment of the present invention, in addition to the first measurement unit 901, the first recording unit 902, the first determining unit 903, the first prediction unit 904, the second measurement unit 908, the second recording unit 909, the second determining unit 910, and the second prediction unit 911, the user equipment 90 may include a sixth determining unit 914. The sixth determining unit 914 is configured to: after the second measurement unit 908 measures the signal strength of the neighboring cell of the serving cell based on the measurement configuration, determine whether the signal strength of the neighboring cell of the serving cell is greater than a second threshold; and if determining that the signal strength of the neighboring cell of the serving cell is greater than the second threshold, trigger the second recording unit 909 to record the signal strength of the neighboring cell of the serving cell within the first preset time period.

After the sixth determining unit 914 is disposed in the user equipment 90, the user equipment 90 starts to record the signal strength of the neighboring cell of the serving cell within the first preset time period only when the signal strength of the neighboring cell of the serving cell is greater than the second threshold, avoiding recording the signal strength of the neighboring cell of the serving cell that is at each time point. This greatly saves storage space of the user equipment and simplifies an operation of the user equipment 90.

To further improve the solution in this embodiment of the present invention, the user equipment 90 may further include all of the first measurement unit 901, the first recording unit 902, the first determining unit 903, the first prediction unit 904, the second measurement unit 908, the second recording unit 909, the second determining unit 910, the second prediction unit 911, a fourth determining unit 912, a second reporting unit 913, and a sixth determining unit 914. For specific implementation of all the units, reference may be made to descriptions of the same units in the foregoing solution.

It should be noted that for specific implementation of the user equipment 90 described in Embodiment 3, reference may be made to the corresponding method described in Embodiment 1, and details are not repeated herein.

### Embodiment 4

Referring to FIG. 10, FIG. 10 is another schematic structural diagram of user equipment 100 according to an embodiment of the present invention. The user equipment 100 includes a measurement unit 1001, a first determining unit 1002, a second determining unit 1003, and a reporting unit 1004. Detailed descriptions of all units are as follows:

The measurement unit 1001 is configured to receive a measurement configuration, and measure signal strength of a cell.

The first determining unit 1002 is configured to determine whether a measurement value at the last preset time point of a first preset time period satisfies a reporting criterion.

The second determining unit 1003 is configured to: when the first determining unit 1002 determines that the measurement value satisfies the reporting criterion, determine whether there is a predicted value.

The reporting unit 1004 is configured to: when the second determining unit 1003 determines that there is the predicted value, report the predicted value.

According to the user equipment 100 described in FIG. 10, when the signal strength of the cell satisfies the reporting criterion, the user equipment 100 first determines whether there is a predicted value; and if there is the predicted value, reports the predicted value, so that a base station can perform a cell handover in advance according to the predicted value. This ensures network connection continuity.

Referring to FIG. 10A, FIG. 10A is another schematic structural diagram of user equipment according to an embodiment of the present invention. To further improve the solution in this embodiment of the present invention, in addition to the measurement unit 1001, the first determining unit 1002, the second determining unit 1003, and the reporting unit 1004, the user equipment 100 may include a recording unit 1005, an analysis unit 1006, and a prediction unit 1007. Detailed descriptions of the newly added units are as follows:

The recording unit 1005 is configured to: after the measurement unit 1001 receives the measurement configuration and measures the signal strength of the serving cell, record a measurement value of the signal strength of the cell within the first preset time period.

The analysis unit 1006 is configured to obtain, by means of analysis, a change trend of the signal strength of the cell based on the measurement value of the signal strength of the cell within the first preset time period.

The prediction unit 1007 is configured to predict, according to the change trend, a predicted value of the signal strength of the cell that is at a second preset time.

After the recording unit 1005, the analysis unit 1006, and the prediction unit 1007 are disposed in the user equipment 100, the user equipment 100 records the signal strength of the cell within the first preset time period to obtain a change trend of the cell that is within a period of time, and predicts, based on the change trend, the predicted value of the signal strength of the cell that is at the second preset time, so that the measurement value is closer to a measurement value of the signal strength that is at the second preset time.

Referring to FIG. 10B, FIG. 10B is another schematic structural diagram of user equipment according to an embodiment of the present invention. To further improve the solution in this embodiment of the present invention, in addition to the measurement unit 1001, the first determining unit 1002, the second determining unit 1003, the reporting unit 1004, the recording unit 1005, the analysis unit 1006, and the prediction unit 1007, the user equipment 100 may include a third determining unit 1008. The third determining unit 1008 is configured to: after the measurement unit 1001 receives the measurement configuration and measures the signal strength of the cell, determine whether a measurement value obtained by means of measurement before the first preset time period satisfies a preset criterion; and if it is determined that the measurement value satisfies the preset criterion, trigger the recording unit 1005 to record the measurement value of the signal strength of the cell within the first preset time period.

After the third determining unit 1008 is disposed in the user equipment 100, the user equipment 100 starts to record the signal strength of the cell within the first preset time period only when the signal strength of the cell satisfies the preset criterion, avoiding recording the signal strength of the cell that is at each time point. This greatly saves storage space of the user equipment and simplifies an operation of the user equipment.

It should be noted that for specific implementation of the user equipment 100 described in Embodiment 4, reference may be made to the corresponding method described in Embodiment 2, and details are not repeated herein.

### Embodiment 5

Referring to FIG. 11, FIG. 11 is a schematic structural diagram of user equipment 110 according to an embodiment of the present invention. The user equipment 110 includes a modem (modem) 111 and an antenna 112.

The modem 111 is configured to receive a measurement configuration by using the antenna 112, and measure signal strength of a serving cell. The modem 111 is configured to record the signal strength of the serving cell within a first preset time period. The modem 111 is configured to determine, based on the signal strength of the serving cell within the first preset time period, whether the signal strength of the serving cell is falling. The modem 111 is configured to: when the signal strength of the serving cell is falling, predict signal strength of the serving cell that is at a second preset time.

The modem 111 includes a processor 1101 (the processor may be a DSP chip), a memory 1102, and a receiver circuit 1103. The receiver circuit 1103 receives a radio frequency signal by using the antenna 112. In some embodiments of the present invention, the processor 1101, the memory 1102, the receiver circuit 1103, and the antenna 112 may be connected by using a bus or in another manner. In FIG. 11, a bus 1105 is used as an example.

The memory 1102 is configured to store program code. The processor 1101 is configured to invoke program code that is for predicting signal strength of a serving cell and that is stored by the memory 1102, to predict the signal strength of the serving cell.

The processor 1101 controls the receiver circuit 1103 to receive a measurement configuration. The receiver circuit 1103 receives a radio frequency signal by using the antenna 112, and then performs operations such as amplification, filtering, and demodulation on the radio frequency signal to obtain the measurement configuration carried by the radio frequency signal. The processor 1101 may measure the signal strength of the serving cell according to an instruction of the measurement configuration. Optionally, the measurement configuration may be stored in the memory 1102. The processor 1101 may read the measurement configuration from the memory 1102 and measure the signal strength of the serving cell according to an instruction of the measurement configuration.

The processor 1101 records the signal strength of the serving cell within the first preset time period.

The processor 1101 determines, based on the signal strength of the serving cell within the first preset time period, whether the signal strength of the serving cell is falling.

If the signal strength of the serving cell is falling, the processor 1101 predicts the signal strength of the serving cell that is at the second preset time.

By executing the program code for predicting the signal strength of the serving cell, the processor 1101 predicts signal strength of the serving cell at a subsequent time point according to a change law of the trend when determining that the signal strength of the serving cell is falling. In this way, the signal strength of the serving cell can be predicted in advance.

In an optional solution, the processor 1101 may further invoke program code that is for predicting signal strength of a neighboring cell of the serving cell and that is in the memory 1102 to predict the signal strength of the neighboring cell of the serving cell.

The processor 1101 measures the signal strength of the neighboring cell of the serving cell based on the measurement configuration.

The processor 1101 records signal strength of the neighboring cell of the serving cell within the first preset time period.

The processor 1101 determines, based on the signal strength of the neighboring cell of the serving cell within the first preset time period, whether the signal strength of the neighboring cell of the serving cell is increasing.

If the signal strength of the neighboring cell of the serving cell is increasing, the processor 1101 predicts signal strength of the neighboring cell of the serving cell that is at the second preset time.

By executing the program code for predicting the signal strength of the neighboring cell of the serving cell, when determining that the signal strength of the neighboring cell of the serving cell is increasing, the processor 1101 predicts, according to the rising trend, signal strength of the neighboring cell of the serving cell that is at the second preset time. In this way, the signal strength of the neighboring cell of the serving cell can be predicted in advance.

In an optional solution, the modem 111 further includes a transmitter circuit 1104. The transmitter circuit 1104 sends a radio frequency signal by using the antenna 112. After executing the program code for predicting the signal strength of the serving cell, the processor 1101 may invoke program code that is for reporting the signal strength of the serving cell and that is in the memory 1102 to report the signal strength of the serving cell.

The processor 1101 determines, based on the predicted signal strength of the serving cell that is at the second preset time, whether a reporting criterion is satisfied. If the reporting criterion is satisfied, the processor 1101 modulates the predicted signal strength of the serving cell that is at the second preset time to a carrier by using the transmitter circuit 1104. The transmitter circuit 1104 performs operations such as amplification and filtering on the carrier to form a radio frequency signal. Finally, the radio frequency signal is sent by using the antenna 112, to report the predicted signal strength of the serving cell that is at the second preset time to a base station.

By executing the foregoing code for reporting the signal strength of the serving cell, when using at least one of an event A3, A5, or B1 as a criterion for determining whether to report a measurement report, the processor 1101 compares the predicted signal strength of the serving cell that is at the second preset time with another measure (for example, the signal strength of the neighboring cell or an absolute threshold) in the corresponding event to determine whether the criterion for reporting the measurement report is satisfied; and if the measurement report is satisfied, reports the predicted signal strength to the base station by using the measurement report, so that the base station performs a cell handover based on the predicted signal strength instead of actual signal strength. That is, the base station is propelled to perform a cell handover in advance. This avoids that, in the handover process, the signal strength of the serving cell falls to such an extent that the user equipment 110 cannot receive an RRC message, ensuring a smooth handover of the user equipment 110 from the serving cell to another cell.

In another optional solution, after the processor 1101 executes the foregoing program code for predicting the signal strength of the serving cell and predicting the signal strength of the neighboring cell of the serving cell, the processor 1101 may further execute the program code for reporting the signal strength of the neighboring cell of the serving cell, to report the signal strength of the neighboring cell of the serving cell.

The processor 1101 determines, based on the predicted signal strength of the neighboring cell of the serving cell that is at the second preset time, whether a reporting criterion is satisfied.

If the reporting criterion is satisfied, the processor 1101 modulates the predicted signal strength of the neighboring cell of the serving cell that is at the second preset time to a carrier by using the transmitter circuit 1104. The transmitter circuit 1104 performs operations such as amplification and filtering on the carrier to form a radio frequency signal. Finally, the radio frequency signal is sent by using the antenna 112, so as to report the predicted signal strength of the neighboring cell of the serving cell that is at the second preset time to a base station.

By executing the program code for reporting the signal strength of the neighboring cell of the serving cell, when using at least one of an event A3, A4, A5, A6, B1, or B2 as a criterion for determining whether to report a measurement report, the processor 1101 compares the predicted signal strength of the neighboring cell of the serving cell that is at the second preset time with another measure (for example, the signal strength of the serving cell or an absolute threshold) in the corresponding event to determine whether the reporting criterion is satisfied; and if the criterion is satisfied, reports the predicted signal strength of the neighboring cell of the serving cell to the base station by using the measurement report, so that the base station determines, based on the predicted signal strength of the neighboring cell of the serving cell instead of actual signal strength of the neighboring cell of the serving cell, whether the serving cell of the processor 1101 needs to be changed to the neighboring cell of the serving cell from the serving cell. This avoids that after the processor 1101 is handed over to the neighboring cell of the serving cell, the actual signal strength of the neighboring cell of the serving cell cannot support normal communication of the user equipment.

In another optional solution, after the processor 1101 executes the program code for predicting the signal strength of the serving cell, the processor 1101 may further execute a determining program to save storage space of the memory 1102 and simplify operation of the processor 1101. Specifically, after the processor 1101 receives the measurement configuration by using the receiver circuit 1103 and measures the signal strength of the serving cell, and before the processor 1101 records the signal strength of the serving cell within the first preset time period,
the processor 1101 determines whether the signal strength of the serving cell is less than a first threshold; and
if the signal strength of the serving cell is less than the first threshold, the processor 1101 records the signal strength of the serving cell within the first preset time period.

By executing the foregoing determining program code, the processor 1101 starts to record the signal strength of the serving cell only when the signal strength of the serving cell is less than the first threshold, avoiding recording signal strength of the serving cell that is at each time point. This greatly saves storage space of the memory 1102 and simplifies operation of the processor 1101.

In another optional solution, when executing the foregoing program code for predicting the signal strength of the neighboring cell of the serving cell, the processor 1101 may further execute a determining program. This can save storage space of the memory 1102 and simplify operation of the processor 1101. Specifically, after the processor 1101 measures the signal strength of the neighboring cell of the serving cell based on the measurement configuration, and before the processor 1101 records the signal strength of the neighboring cell of the serving cell within the first preset time period, the processor 1101 determines whether the signal strength of the neighboring cell of the serving cell is greater than a second threshold; and
if the signal strength of the neighboring cell of the serving cell is greater than the second threshold, the processor 1101 records the signal strength of the neighboring cell of the serving cell within the first preset time period.

By executing the foregoing determining program code, the processor 1101 starts to record the signal strength of the neighboring cell of the serving cell only when the signal strength of the neighboring cell of the serving cell is greater than the second threshold, avoiding recording the signal strength of the neighboring cell of the serving cell that is at each time point. This greatly saves storage space of the memory 1102 and simplifies operation of the processor 1101.

In another optional solution, when executing the program code for predicting the signal strength of the serving cell, the processor 1101 determines, based on the signal strength of the serving cell within the first preset time period, whether the signal strength of the serving cell is falling. The specific process is as follows:

The processor 1101 determines whether a difference between signal strength at a start time point of the first preset time period and signal strength at an end time point of the first preset time period is greater than a preset threshold, where when the difference between the signal strength at the start time point of the first preset time period and the signal strength at the end time point of the first preset time period is greater than the preset threshold, the signal strength of the serving cell is falling.

In another optional solution, when the program code for measuring the signal strength of the neighboring cell of the serving cell is executed, that the processor 1101 determines, based on the signal strength of the neighboring cell of the serving cell within the first preset time period, whether the signal strength of the neighboring cell of the serving cell is increasing, is specifically:

The processor 1101 determines whether a difference between signal strength at an end time point of the first preset time period and signal strength at a start time point of the first preset time period is greater than a preset threshold, where when the difference between the signal strength at the end time point of the first preset time period and the signal strength at the increasing time point of the first preset time period is greater than the preset threshold, the signal strength of the neighboring cell of the serving cell is increasing.

It should be noted that for specific implementation of the user equipment 110 described in Embodiment 5, reference may be made to the corresponding method described in Embodiment 1, and details are not repeated herein.

### Embodiment 6

Referring to FIG. 12, FIG. 12 is a schematic structural diagram of user equipment 120 according to an embodiment of the present invention. The user equipment 120 includes a modem (modem) 121 and an antenna 122.

The modem 121 is configured to receive a measurement configuration by using the antenna 122, and measure signal strength of a cell. The modem 121 is configured to determine whether a measurement value at the last preset time point of a first preset time period satisfies a reporting criterion. The modem 121 is configured to: when the measurement value satisfies the reporting criterion, determine whether there is a predicted value. The modem 121 is configured to: when there is the predicted value, report the predicted value by using the antenna 122.

The modem 121 includes a processor 1201 (the processor may be a DSP chip), a memory 1202, a receiver circuit 1203, and a transmitter circuit 1204. In some embodiments of the present invention, the processor 1201, the memory 1202, the receiver circuit 1203, the transmitter circuit 1204, and the antenna 122 may be connected by using a bus or in another manner. In FIG. 12, the bus 1205 is used as an example.

The memory 1202 is configured to store program code. The processor 1201 is configured to invoke program code that is for reporting signal strength and that is stored by the memory 1202, to report the signal strength.

The processor 1201 is configured to receive a measurement configuration by using the receiver circuit 1203. The receiver circuit 1203 receives a radio frequency signal by using the antenna 122, and then amplifies, filters, and demodulates the radio frequency signal to obtain the measurement configuration carried by the radio frequency signal. The processor 1201 measures signal strength of a cell according to an instruction of the measurement configuration. Optionally, the measurement configuration may be stored in the memory 1202. The processor 1201 reads the measurement configuration from the memory 1202 and measures signal strength of a cell according to an instruction of the measurement configuration.

The processor 1201 determines whether a measurement value at the last preset time point of a first preset time period satisfies a reporting criterion.

If the measurement value satisfies the reporting criterion, the processor 1201 determines whether there is a predicted value.

If there is the predicted value, the processor 1201 modulates the predicted signal strength of the serving cell that is at the second preset time to a carrier by using the transmitter circuit 1204. The transmitter circuit 1204 performs operations such as amplification and filtering on the carrier to form a radio frequency signal. Finally, the radio frequency signal is sent by using the antenna 122, to report the predicted value to the base station.

By executing the program code that is for reporting the signal strength, when the signal strength of the cell satisfies the reporting criterion, the processor first determines whether there is a predicted value, and if there is the predicted value, reports the predicted value, so that the source base station can perform a cell handover in advance according to the predicted value. This ensures network continuity.

In an optional solution, a specific manner of obtaining the predicted value is that the processor 1201 invokes a prediction program in the memory 1202 to obtain the predicted value.

After the processor 1201 receives the measurement configuration by using the antenna 122 and measures the signal strength of the cell, and before the processor 1201 determines whether a measurement value at the last preset time point of a first preset time period satisfies the reporting criterion, the processor 1201 records a measurement value of the signal strength of the cell within the first preset time period;
the processor 1201 obtains, by means of analysis, a change trend of the signal strength of the cell based on the measurement value of the signal strength of the cell within the first preset time period; and
the processor 1201 predicts, according to the change trend, a predicted value of the signal strength of the cell that is at a second preset time.

In another optional solution, before executing the program code that is for predicting signal strength, the processor 1201 may first invoke a determining program in the memory 1202 to determine whether a measurement value obtained by means of measurement before the first preset time period satisfies a preset criterion. This can save storage space of the memory 1202 and simplify computation of the processor 1201.

After the processor 1201 receives the measurement configuration by using the antenna 122 and measures the signal strength of the cell, and before the processor 1201 records the measurement value of the signal strength of the cell within the first preset time period,
the processor 1201 determines whether a measurement value obtained by means of measurement before the first preset time period meets a preset criterion; and
if the measurement value satisfies the preset criterion, the processor 1201 records a measurement value of the signal strength of the cell within the first preset time period.

In an optional solution, the measurement configuration includes the preset criterion, or the preset criterion is prestored in the user equipment.

In another optional solution, the cell includes a serving cell, a neighboring cell of the serving cell, or the serving cell and a neighboring cell of the serving cell.

It should be noted that for specific implementation of the user equipment 120 described in Embodiment 6, reference may be made to the corresponding method described in Embodiment 2, and details are not repeated herein.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

What is disclosed above is merely examples of embodiments of the present invention, and certainly is not intended to limit the protection scope of the present invention.

## Claims

1. A cell signal strength prediction method, comprising:
receiving (S201, S208), by user equipment, a measurement configuration, and measuring (S201) signal strength of a serving cell;
recording (S202), by the user equipment, the signal strength of the serving cell within a first preset time period;
determining (S203), by the user equipment based on the signal strength of the serving cell within the first preset time period, whether the signal strength of the serving cell is falling; and
if the signal strength of the serving cell is falling, predicting (S204), by the user equipment, signal strength of the serving cell that is at a second preset time;
wherein the method further comprises:
measuring (S208), by the user equipment, signal strength of a neighboring cell of the serving cell based on the measurement configuration;
recording (S209), by the user equipment, the signal strength of the neighboring cell of the serving cell within the first preset time period;
determining (S210), by the user equipment based on the signal strength of the neighboring cell of the serving cell within the first preset time period, whether the signal strength of the neighboring cell of the serving cell is increasing; and
if the signal strength of the neighboring cell of the serving cell is increasing, predicting (S211), by the user equipment, signal strength of the neighboring cell of the serving cell that is at the second preset time.

2. The method according to claim 1, wherein the method further comprises:
determining (S205), by the user equipment based on the predicted signal strength of the serving cell that is at the second preset time, whether a reporting criterion is satisfied; and
if the reporting criterion is satisfied, reporting (S206), by the user equipment, the predicted signal strength of the serving cell that is at the second preset time.

3. The method according to claim 1 or 2, wherein the method further comprises:
determining (S212), by the user equipment based on the predicted signal strength of the neighboring cell of the serving cell that is at the second preset time, whether a reporting criterion is satisfied; and
if the reporting criterion is satisfied, reporting (S213), by the user equipment, the predicted signal strength of the neighboring cell of the serving cell that is at the second preset time.

4. The method according to any one of claims 1-3, wherein after the receiving (S201, S208), by user equipment, a measurement configuration, and measuring (S201) signal strength of a serving cell, and before the recording (S202), by the user equipment, the signal strength of the serving cell within a first preset time period, the method further comprises:
determining (S207), by the user equipment, whether the signal strength of the serving cell is less than a first threshold; and
if the signal strength of the serving cell is less than the first threshold, performing the step of recording (S202), by the user equipment, the signal strength of the serving cell within a first preset time period.

5. The method according to any one of claims 1-4, wherein after the measuring (S208), by the user equipment, signal strength of a neighboring cell of the serving cell based on the measurement configuration, and before the recording (S209), by the user equipment, the signal strength of the neighboring cell of the serving cell within the first preset time period, the method further comprises:
determining (S214), by the user equipment, whether the signal strength of the neighboring cell of the serving cell is greater than a second threshold; and
if the signal strength of the neighboring cell of the serving cell is greater than the second threshold, performing the step of recording (S209), by the user equipment, the signal strength of the neighboring cell of the serving cell within the first preset time period.

6. The method according to any one of claims 1-5, wherein the determining (S203), by the user equipment based on the signal strength of the serving cell within the first preset time period, whether the signal strength of the serving cell is falling, is specifically:
determining, by the user equipment, whether a difference between signal strength at a start time point of the first preset time period and signal strength at an end time point of the first preset time period is greater than a preset threshold, wherein when the difference between the signal strength at the start time point of the first preset time period and the signal strength at the end time point of the first preset time period is greater than the preset threshold, the signal strength of the serving cell is falling.

7. The method according to any one of claims 1-6, wherein the determining (S203), by the user equipment based on the signal strength of the neighboring cell of the serving cell within the first preset time period, whether the signal strength of the neighboring cell of the serving cell is increasing, is specifically:
determining, by the user equipment, whether a difference between signal strength at an end time point of the first preset time period and signal strength at a start time point of the first preset time period is greater than a preset threshold, wherein when the difference between the signal strength at the end time point of the first preset time period and the signal strength at the start time point of the first preset time period is greater than the preset threshold, the signal strength of the neighboring cell of the serving cell is increasing.

8. User equipment (110), comprising a modem (111) and an antenna (112), wherein
the modem (111) is configured to receive a measurement configuration by using the antenna (112), and measure signal strength of a serving cell;
the modem (111) is configured to record the signal strength of the serving cell within a first preset time period;
the modem (111) is configured to determine, based on the signal strength of the serving cell within the first preset time period, whether the signal strength of the serving cell is falling; and
the modem (111) is configured to: when the signal strength of the serving cell is falling, predict signal strength of the serving cell that is at a second preset time;
wherein
the modem (111) is configured to measure signal strength of a neighboring cell of the serving cell based on the measurement configuration;
the modem (111) is configured to record the signal strength of the neighboring cell of the serving cell within the first preset time period;
the modem (111) is configured to determine, based on the signal strength of the neighboring cell of the serving cell within the first preset time period, whether the signal strength of the neighboring cell of the serving cell is increasing; and
the modem (111) is configured to: when the signal strength of the neighboring cell of the serving cell is increasing, predict signal strength of the neighboring cell of the serving cell that is at the second preset time.

9. The user equipment according to claim 8, wherein
the modem (111) is configured to determine, based on the predicted signal strength of the serving cell that is at the second preset time, whether a reporting criterion is satisfied; and
the modem (111) is configured to: when the reporting criterion is satisfied, report the predicted signal strength of the serving cell that is at the second preset time by using the antenna.

10. The user equipment according to claim 8 or 9, wherein
the modem (111) is configured to determine, based on the predicted signal strength of the neighboring cell of the serving cell that is at the second preset time, whether a reporting criterion is satisfied; and
the modem (111) is configured to: when the reporting criterion is satisfied, report the predicted signal strength of the neighboring cell of the serving cell that is at the second preset time by using the antenna.

11. The user equipment according to any one of claims 8-10, wherein after that the modem (111) is configured to receive a measurement configuration by using the antenna (112), and measure signal strength of a serving cell,
the modem (111) is configured to determine whether the signal strength of the serving cell is less than a first threshold; and
the modem (111) is configured to: when the signal strength of the serving cell is less than the first threshold, record the signal strength of the serving cell within the first preset time period.

12. The user equipment according to any one of claims 8-11, wherein after that the modem (111) is configured to measure signal strength of a neighboring cell of the serving cell based on the measurement configuration, and before that the modem (111) is configured to record the signal strength of the neighboring cell of the serving cell within the first preset time period,
the modem (111) is configured to determine whether the signal strength of the neighboring cell of the serving cell is greater than a second threshold; and
the modem (111) is configured to: when the signal strength of the neighboring cell of the serving cell is greater than the second threshold, record the signal strength of the neighboring cell of the serving cell within the first preset time period.

13. The user equipment according to any one of claims 8-12, wherein that the modem (111) is configured to determine, based on the signal strength of the serving cell within the first preset time period, whether the signal strength of the serving cell is falling, is specifically:
the modem (111) is configured to determine whether a difference between signal strength at a start time point of the first preset time period and signal strength at an end time point of the first preset time period is greater than a particular preset threshold, wherein when the difference between the signal strength at the start time point of the first preset time period and the signal strength at the end time point of the first preset time period is greater than the particular preset threshold, the signal strength of the serving cell is falling.

## Patentansprüche

1. Zellensignalstärkevorhersageverfahren, das Folgendes umfasst:
Empfangen (S201, S208), durch ein Benutzergerät, einer Messkonfiguration und Messen (S201) einer Signalstärke einer versorgenden Zelle;
Aufzeichnen (S202), durch das Benutzergerät, der Signalstärke der versorgenden Zelle innerhalb eines ersten vorgegebenen Zeitraums;
Bestimmen (S203), durch das Benutzergerät basierend auf der Signalstärke der versorgenden Zelle innerhalb des ersten vorgegebenen Zeitraums, ob die Signalstärke der versorgenden Zelle abnimmt; und
falls die Signalstärke der versorgenden Zelle abnimmt, Vorhersagen (S204), durch das Benutzergerät, einer Signalstärke der versorgenden Zelle zu einer zweiten vorgegebenen Zeit;
wobei das Verfahren ferner Folgendes umfasst:
Messen (S208), durch das Benutzergerät, einer Signalstärke einer Nachbarzelle der versorgenden Zelle basierend auf der Messkonfiguration;
Aufzeichnen (S209), durch das Benutzergerät, der Signalstärke der Nachbarzelle der versorgenden Zelle innerhalb des ersten vorgegebenen Zeitraums;
Bestimmen (S210), durch das Benutzergerät basierend auf der Signalstärke der Nachbarzelle der versorgenden Zelle innerhalb des ersten vorgegebenen Zeitraums, ob die Signalstärke der Nachbarzelle der versorgenden Zelle zunimmt; und
falls die Signalstärke der Nachbarzelle der versorgenden Zelle zunimmt, Vorhersagen (S211), durch das Benutzergerät, einer Signalstärke der Nachbarzelle der versorgenden Zelle zu der zweiten vorgegebenen Zeit.

2. Verfahren nach Anspruch 1, wobei das Verfahren ferner Folgendes umfasst:
Bestimmen (S205), durch das Benutzergerät basierend auf der vorhergesagten Signalstärke der versorgenden Zelle zu der zweiten vorgegebenen Zeit, ob ein Meldekriterium erfüllt ist; und
falls das Meldekriterium erfüllt ist, Melden (S206), durch das Benutzergerät, der vorhergesagten Signalstärke der versorgenden Zelle zu der zweiten vorgegebenen Zeit.

3. Verfahren nach Anspruch 1 oder 2, wobei das Verfahren ferner Folgendes umfasst:
Bestimmen (S212), durch das Benutzergerät basierend auf der vorhergesagten Signalstärke der Nachbarzelle der versorgenden Zelle zu der zweiten vorgegebenen Zeit, ob ein Meldekriterium erfüllt ist; und
falls das Meldekriterium erfüllt ist, Melden (S213), durch das Benutzergerät, der vorhergesagten Signalstärke der Nachbarzelle der versorgenden Zelle zu der zweiten vorgegebenen Zeit.

4. Verfahren nach einem der Ansprüche 1-3, wobei das Verfahren nach dem Empfangen (S201, S208), durch ein Benutzergerät, einer Messkonfiguration und Messen (S201) einer Signalstärke einer versorgenden Zelle und vor dem Aufzeichnen (S202), durch das Benutzergerät, der Signalstärke der versorgenden Zelle innerhalb eines ersten vorgegebenen Zeitraums ferner Folgendes umfasst:
Bestimmen (S207), durch das Benutzergerät, ob die Signalstärke der versorgenden Zelle geringer als eine erste Schwelle ist; und
falls die Signalstärke der versorgenden Zelle geringer als die erste Schwelle ist, Durchführen des Schritts des Aufzeichnens (S202), durch das Benutzergerät, der Signalstärke der versorgenden Zelle innerhalb eines ersten vorgegebenen Zeitraums.

5. Verfahren nach einem der Ansprüche 1-4, wobei das Verfahren nach dem Messen (S208), durch das Benutzergerät, einer Signalstärke einer Nachbarzelle der versorgenden Zelle basierend auf der Messkonfiguration und vor dem Aufzeichnen (S209), durch das Benutzergerät, der Signalstärke der Nachbarzelle der versorgenden Zelle innerhalb des ersten vorgegebenen Zeitraums ferner Folgendes umfasst:
Bestimmen (S214), durch das Benutzergerät, ob die Signalstärke der Nachbarzelle der versorgenden Zelle größer als eine zweite Schwelle ist; und
falls die Signalstärke der Nachbarzelle der versorgenden Zelle größer als die zweite Schwelle ist, Durchführen des Schritts des Aufzeichnens (S209), durch das Benutzergerät, der Signalstärke der Nachbarzelle der versorgenden Zelle innerhalb des ersten vorgegebenen Zeitraums.

6. Verfahren nach einem der Ansprüche 1-5, wobei das Bestimmen (S203), durch das Benutzergerät basierend auf der Signalstärke der versorgenden Zelle innerhalb des ersten vorgegebenen Zeitraums, ob die Signalstärke der versorgenden Zelle abnimmt, insbesondere Folgendes ist:
Bestimmen, durch das Benutzergerät, ob eine Differenz zwischen einer Signalstärke zu einem Startzeitpunkt des ersten vorgegebenen Zeitraums und einer Signalstärke zu einem Endzeitpunkt des ersten vorgegebenen Zeitraums größer als eine vorgegebene Schwelle ist, wobei, wenn die Differenz zwischen der Signalstärke zum Startzeitpunkt des ersten vorgegebenen Zeitraums und der Signalstärke zum Endzeitpunkt des ersten vorgegebenen Zeitraums größer als die vorgegebene Schwelle ist, die Signalstärke der versorgenden Zelle abnimmt.

7. Verfahren nach einem der Ansprüche 1-6, wobei das Bestimmen (S203), durch das Benutzergerät basierend auf der Signalstärke der Nachbarzelle der versorgenden Zelle innerhalb des ersten vorgegebenen Zeitraums, ob die Signalstärke der Nachbarzelle der versorgenden Zelle zunimmt, insbesondere Folgendes ist:
Bestimmen, durch das Benutzergerät, ob eine Differenz zwischen einer Signalstärke zu einem Endzeitpunkt des ersten vorgegebenen Zeitraums und einer Signalstärke zu einem Startzeitpunkt des ersten vorgegebenen Zeitraums größer als eine vorgegebene Schwelle ist, wobei, wenn die Differenz zwischen der Signalstärke zum Endzeitpunkt des ersten vorgegebenen Zeitraums und der Signalstärke zum Startzeitpunkt des ersten vorgegebenen Zeitraums größer als die vorgegebene Schwelle ist, die Signalstärke der Nachbarzelle der versorgenden Zelle zunimmt.

8. Benutzergerät (110), das ein Modem (111) und eine Antenne (112) umfasst, wobei das Modem (111) ausgelegt ist zum Empfangen einer Messkonfiguration durch Verwenden der Antenne (112) und Messen einer Signalstärke einer versorgenden Zelle;
das Modem (111) ausgelegt ist zum Aufzeichnen der Signalstärke der versorgenden Zelle innerhalb eines ersten vorgegebenen Zeitraums;
das Modem (111) ausgelegt ist zum Bestimmen, basierend auf der Signalstärke der versorgenden Zelle innerhalb des ersten vorgegebenen Zeitraums, ob die Signalstärke der versorgenden Zelle abnimmt; und
das Modem (111) zu Folgendem konfiguriert ist: wenn die Signalstärke der versorgenden Zelle abnimmt, Vorhersagen einer Signalstärke der versorgenden Zelle zu einer zweiten vorgegebenen Zeit;
wobei
das Modem (111) ausgelegt ist zum Messen einer Signalstärke einer Nachbarzelle der versorgenden Zelle basierend auf der Messkonfiguration;
das Modem (111) ausgelegt ist zum Aufzeichnen der Signalstärke der Nachbarzelle der versorgenden Zelle innerhalb des ersten vorgegebenen Zeitraums;
das Modem (111) ausgelegt ist zum Bestimmen, basierend auf der Signalstärke der Nachbarzelle der versorgenden Zelle innerhalb des ersten vorgegebenen Zeitraums, ob die Signalstärke der Nachbarzelle der versorgenden Zelle zunimmt; und
das Modem (111) zu Folgendem konfiguriert ist: wenn die Signalstärke der Nachbarzelle der versorgenden Zelle zunimmt, Vorhersagen einer Signalstärke der Nachbarzelle der versorgenden Zelle zu der zweiten vorgegebenen Zeit.

9. Benutzergerät nach Anspruch 8, wobei
das Modem (111) ausgelegt ist zum Bestimmen, basierend auf der vorhergesagten Signalstärke der versorgenden Zelle zu der zweiten vorgegebenen Zeit, ob ein Meldekriterium erfüllt ist; und
das Modem (111) zu Folgendem konfiguriert ist: wenn das Meldekriterium erfüllt ist, Melden der vorhergesagten Signalstärke der versorgenden Zelle zu der zweiten vorgegebenen Zeit durch Verwenden der Antenne.

10. Benutzergerät nach Anspruch 8 oder 9, wobei
das Modem (111) ausgelegt ist zum Bestimmen, basierend auf der vorhergesagten Signalstärke der Nachbarzelle der versorgenden Zelle zu der zweiten vorgegebenen Zeit, ob ein Meldekriterium erfüllt ist; und
das Modem (111) zu Folgendem konfiguriert ist: wenn das Meldekriterium erfüllt ist, Melden der vorhergesagten Signalstärke der Nachbarzelle der versorgenden Zelle zu der zweiten vorgegebenen Zeit durch Verwenden der Antenne.

11. Benutzergerät nach einem der Ansprüche 8-10, wobei nach Konfigurieren des Modems (111) zum Empfangen einer Messkonfiguration durch Verwenden der Antenne (112) und Messen einer Signalstärke einer versorgenden Zelle,
das Modem (111) ausgelegt ist zum Bestimmen, ob die Signalstärke der versorgenden Zelle geringer als eine erste Schwelle ist; und
das Modem (111) zu Folgendem konfiguriert ist: wenn die Signalstärke der versorgenden Zelle geringer als die erste Schwelle ist, Aufzeichnen der Signalstärke der versorgenden Zelle innerhalb eines ersten vorgegebenen Zeitraums.

12. Benutzergerät nach einem der Ansprüche 8-11, wobei nach Konfigurieren des Modems (111) zum Messen einer Signalstärke einer Nachbarzelle der versorgenden Zelle basierend auf der Messkonfiguration und vor Konfigurieren des Modems (111) zum Aufzeichnen der Signalstärke der Nachbarzelle der versorgenden Zelle innerhalb des ersten vorgegebenen Zeitraums,
das Modem (111) ausgelegt ist zum Bestimmen, ob die Signalstärke der Nachbarzelle der versorgenden Zelle größer als eine zweite Schwelle ist; und
das Modem (111) zu Folgendem konfiguriert ist: wenn die Signalstärke der Nachbarzelle der versorgenden Zelle größer als die zweite Schwelle ist, Aufzeichnen der Signalstärke der Nachbarzelle der versorgenden Zelle innerhalb des ersten vorgegebenen Zeitraums.

13. Benutzergerät nach einem der Ansprüche 8-12, wobei Konfigurieren des Modems (111) zum Bestimmen, basierend auf der Signalstärke der versorgenden Zelle innerhalb des ersten vorgegebenen Zeitraums, ob die Signalstärke der versorgenden Zelle abnimmt, insbesondere Folgendes ist:
das Modem (111) ist konfiguriert zum Bestimmen, ob eine Differenz zwischen einer Signalstärke zu einem Startzeitpunkt des ersten vorgegebenen Zeitraums und einer Signalstärke zu einem Endzeitpunkt des ersten vorgegebenen Zeitraums größer als eine spezielle vorgegebene Schwelle ist, wobei, wenn die Differenz zwischen der Signalstärke zum Startzeitpunkt des ersten vorgegebenen Zeitraums und der Signalstärke zum Endzeitpunkt des ersten vorgegebenen Zeitraums größer als die spezielle vorgegebene Schwelle ist, die Signalstärke der versorgenden Zelle abnimmt.

## Revendications

1. Procédé de prédiction d'une force de signal de cellule, comprenant :
recevoir (S201, S208), par un équipement d'utilisateur, une configuration de mesure, et mesurer (S201) la force du signal d'une cellule de desserte ;
enregistrer (S202), par l'équipement d'utilisateur, la force du signal de la cellule de desserte dans une première période de temps prédéfinie ;
déterminer (S203), par l'équipement d'utilisateur, sur la base de la force du signal de la cellule de desserte dans la première période de temps prédéfinie, si la force du signal de la cellule de desserte est en baisse ; et
si la force du signal de la cellule de desserte est en baisse, prédire (S204), par l'équipement d'utilisateur, la force du signal de la cellule de desserte qui est à un second temps prédéfini ;
le procédé comprenant en outre :
mesurer (S208), par l'équipement d'utilisateur, la force du signal d'une cellule voisine de la cellule de desserte sur la base de la configuration de mesure ;
enregistrer (S209), par l'équipement d'utilisateur, la force du signal de la cellule voisine de la cellule de desserte dans la première période de temps prédéfinie ;
déterminer (S210), par l'équipement d'utilisateur, sur la base de la force du signal de la cellule voisine de la cellule de desserte dans la première période de temps prédéfinie, si la force du signal de la cellule voisine de la cellule de desserte est en hausse ; et
si la force du signal de la cellule voisine de la cellule de desserte est en hausse, prédire (S211), par l'équipement d'utilisateur, la force de signal de la cellule voisine de la cellule de desserte qui est au second temps prédéfini.

2. Procédé selon la revendication 1, le procédé comprenant en outre :
déterminer (S205), par l'équipement d'utilisateur, sur la base de la force du signal prédite de la cellule de desserte qui est au second temps prédéfini, si un critère de signalisation est satisfait ; et
si le critère de signalisation est satisfait, signaler (S206), par l'équipement d'utilisateur, la force du signal prédite de la cellule de desserte qui est au second temps prédéfini.

3. Procédé selon la revendication 1 ou 2, le procédé comprenant en outre :
déterminer (S212), par l'équipement d'utilisateur, sur la base de la force du signal prédite de la cellule voisine de la cellule de desserte qui est au second temps prédéfini, si un critère de signalisation est satisfait ; et
si le critère de signalisation est satisfait, signaler (S213), par l'équipement d'utilisateur, la force du signal prédite de la cellule voisine de la cellule de desserte qui est au second temps prédéfini.

4. Procédé selon l'une quelconque des revendications 1 à 3, après la réception (S201, S208), par l'équipement d'utilisateur, d'une configuration de mesure, et la mesure (S201) d'une force du signal d'une cellule de desserte, et avant l'enregistrement (S202), par l'équipement d'utilisateur, de la force du signal de la cellule de desserte dans une première période de temps prédéfinie, le procédé comprenant en outre :
déterminer (S207), par l'équipement d'utilisateur, si la force du signal de la cellule de desserte est inférieure à un premier seuil ; et
si la force du signal de la cellule de desserte est inférieure au premier seuil, effectuer l'étape d'enregistrement (S202), par l'équipement d'utilisateur, de la force du signal de la cellule de desserte dans une première période de temps prédéfinie.

5. Procédé selon l'une quelconque des revendications 1 à 4, après la mesure (S208), par l'équipement d'utilisateur, de la force du signal d'une cellule voisine de la cellule de desserte sur la base de la configuration de mesure, et avant l'enregistrement (S209), par l'équipement d'utilisateur, de la force du signal de la cellule voisine de la cellule de desserte dans la première période de temps prédéfinie, le procédé comprenant en outre :
déterminer (S214), par l'équipement d'utilisateur, si la force du signal de la cellule voisine de la cellule de desserte est supérieure à un second seuil ; et
si la force du signal de la cellule voisine de la cellule de desserte est supérieure au second seuil, effectuer l'étape d'enregistrement (S209), par l'équipement d'utilisateur, de la force du signal de la cellule voisine de la cellule de desserte dans la première période de temps de prédéfinie.

6. Procédé selon l'une quelconque des revendications 1 à 5, dans lequel la détermination (S203), par l'équipement d'utilisateur, sur la base de la force du signal de la cellule de desserte dans la première période de temps prédéfinie, du fait que la force du signal de la cellule de desserte est en baisse ou non consiste spécifiquement à :
déterminer, par l'équipement d'utilisateur, si une différence entre la force du signal à un instant de début de la première période de temps prédéfinie et la force du signal à un instant de fin de la première période de temps prédéfinie est supérieure à un seuil prédéfini, dans lequel, lorsque la différence entre la force du signal à l'instant de début de la première période de temps prédéfinie et la force du signal à l'instant de fin de la première période de temps prédéfinie est supérieure au seuil prédéfini, la force du signal de la cellule de desserte est en baisse.

7. Procédé selon l'une quelconque des revendications 1 à 6, dans lequel la détermination (S203), par l'équipement d'utilisateur, sur la base de la force du signal de la cellule voisine de la cellule de desserte dans la première période de temps prédéfinie, du fait que la force du signal de la cellule voisine de la cellule de desserte est en hausse ou non, consiste spécifiquement à :
déterminer, par l'équipement d'utilisateur, si une différence entre la force du signal à un instant de fin de la première période de temps prédéfinie et la force du signal à un instant de début de la première période de temps prédéfinie est supérieure à un seuil prédéfini, dans lequel, lorsque la différence entre la force du signal à l'instant de fin de la première période de temps prédéfinie et la force du signal à l'instant de début de la première période de temps prédéfinie est supérieure au seuil prédéfini, la force du signal de la cellule voisine de la cellule de desserte est en hausse.

8. Équipement d'utilisateur (110), comprenant un modem (111) et une antenne (112), dans lequel
le modem (111) est configuré pour recevoir une configuration de mesure en utilisant l'antenne (112), et mesurer la force du signal d'une cellule de desserte ;
le modem (111) est configuré pour enregistrer la force du signal de la cellule de desserte dans une première période de temps prédéfinie ;
le modem (111) est configuré pour déterminer, sur la base de la force du signal de la cellule de desserte dans la première période de temps prédéfinie, si la force du signal de la cellule de desserte est en baisse ; et
le modem (111) est configuré pour : lorsque la force du signal de la cellule de desserte est en baisse, prédire la force du signal de la cellule de desserte qui est à un second temps prédéfini ;
dans lequel
le modem (111) est configuré pour mesurer la force du signal d'une cellule voisine de la cellule de desserte sur la base de la configuration de mesure ;
le modem (111) est configuré pour enregistrer la force du signal de la cellule voisine de la cellule de desserte dans la première période de temps prédéfinie ;
le modem (111) est configuré pour déterminer, sur la base de la force du signal de la cellule voisine de la cellule de desserte dans la première période de temps prédéfinie, si la force du signal de la cellule voisine de la cellule de desserte est en hausse ; et
le modem (111) est configuré pour : lorsque la force du signal de la cellule voisine de la cellule de desserte est en hausse, prédire la force du signal de la cellule voisine de la cellule de desserte qui est au second temps prédéfini.

9. Équipement utilisateur selon la revendication 8, dans lequel
le modem (111) est configuré pour déterminer, sur la base de la force du signal prédite de la cellule de desserte qui est au second temps prédéfini, si un critère de signalisation est satisfait ; et
le modem (111) est configuré pour : lorsque le critère de signalisation est satisfait, signaler la force du signal prédite de la cellule de desserte qui est au second temps prédéfini en utilisant l'antenne.

10. Équipement utilisateur selon la revendication 8 ou 9, dans lequel :
le modem (111) est configuré pour déterminer, sur la base de la force du signal prédite de la cellule voisine de la cellule de desserte qui est au second temps prédéfini, si un critère de signalisation est satisfait ; et
le modem (111) est configuré pour : lorsque le critère de signalisation est satisfait, signaler la force du signal prédite de la cellule voisine de la cellule de desserte qui est au second temps prédéfini en utilisant l'antenne.

11. Équipement d'utilisateur selon l'une quelconque des revendications 8 à 10, dans lequel, après que le modem (111) a été configuré pour recevoir une configuration de mesure en utilisant l'antenne (112), et mesurer la force du signal d'une cellule de desserte,
le modem (111) est configuré pour déterminer si la force du signal de la cellule de desserte est inférieure à un premier seuil ; et
le modem (111) est configuré pour : lorsque la force du signal de la cellule de desserte est inférieure au premier seuil, enregistrer la force du signal de la cellule de desserte dans la première période de temps prédéfinie.

12. Équipement d'utilisateur selon l'une quelconque des revendications 8 à 11, dans lequel, après que le modem (111) a été configuré pour mesurer la force du signal d'une cellule voisine de la cellule de desserte sur la base de la configuration de mesure, et avant que le modem (111) soit configuré pour enregistrer la force du signal de la cellule voisine de la cellule de desserte dans la première période de temps prédéfinie,
le modem (111) est configuré pour déterminer si la force du signal de la cellule voisine de la cellule de desserte est supérieure à un second seuil ; et
le modem (111) est configuré pour : lorsque la force du signal de la cellule voisine de la cellule de desserte est supérieure au second seuil, enregistrer la force du signal de la cellule voisine de la cellule de desserte dans la première période de temps prédéfinie.

13. Équipement d'utilisateur selon l'une quelconque des revendications 8 à 12, dans lequel le fait que modem (111) soit configuré pour déterminer, sur la base de la force du signal de la cellule de desserte dans la première période de temps prédéfinie, si la force du signal de la cellule de desserte est en baisse, signifie spécifiquement que :
le modem (111) est configuré pour déterminer si une différence entre la force du signal à un instant de début de la première période de temps prédéfinie et la force du signal à un instant de fin de la première période de temps prédéfinie est supérieure à un seuil prédéfini particulier, dans lequel, lorsque la différence entre la force du signal à l'instant de début de la première période de temps prédéfinie et la force du signal à l'instant de fin de la première période de temps prédéfinie est supérieure au seuil prédéfini particulier, la force du signal de la cellule de desserte est en baisse.
